# EUROPEAN PATENT SPECIFICATION

(11) **EP 2 833 300 B1**
(45) Date of publication and mention of the grant of the patent: **03.08.2016**
(21) Application number: 14171208.3
(22) Date of filing: 04.06.2014
(51) Int. Cl.: G06Q 10/00

(54) **Power management of electronic devices configured to generate analytical reports**
Leistungsverwaltung von elektronischen Vorrichtungen zur Erstellung von Analyseberichten
Gestion de puissance de dispositifs électroniques configurés pour générer des rapports analytiques

(30) Priority: 31.07.2013 US 201313955772
(43) Date of publication of application: 04.02.2015
(73) Proprietor: SAP SE, 69190 Walldorf (DE)
(72) Inventor: Kamenz, Torsten, 69190 Walldorf (DE); Kemmler, Andreas, 69190 Walldorf (DE)
(74) Representative: Richardt Patentanwälte PartG mbB

(56) References cited:
- US-A1- 2011 072 007
- US-A1- 2012 166 620
- US-A1- 2012 239 609
- US-A1- 2013 036 115

## Description

### Field of the invention

### Technical Field

The present disclosure relates to a reporting system on a computer system. More particularly, the present disclosure relates to enhanced management of electrical power consumption by electronic devices configured to generate analytical reports on electronic devices using remote databases. The present invention is attributed to IPC class H04L "transmission of digital information".

### Background

A business organization more than likely has a need to, and indeed does, generate a multitude of reports about its business operations relating to several topics such as human resources, finance, marketing, *etc.* The business organization may use different systems and/or sub-systems in generating these reports, including different processors, databases, and other computer system components. The totality of the reports generated by a business organization can be referred to as the organization's business suite applications. These business applications can define a specific set of analytical scenarios that are executed. The business applications may need to replicate tables that are required for these applications from one system to another. The memory size and the amount of replicated data are critical resources especially in a case when said reports have to be generated on end terminals connected to the remote terminals via digital cellular telecommunication networks, wherein a source data needed for generation of said reports is stored on the remote terminals.

The US 2012/239609 A1 discloses a computer implemented method of relating data and generating reports. The method includes storing, by an OLAP system, a network data structure that relates a plurality of data objects. The method further includes storing transactional data in an in-memory database in the OLAP system.

The method further includes generating, by the OLAP system, a report using the stored transactional data according to the network data structure. In this manner, deficiencies of the traditional star schema paradigm of data warehousing may be avoided.

The US 2012/166620 A1 discloses a system and method for providing real time analytics and reporting across networked applications. The real time analytics and reporting across networked applications may be provided by extending the reporting metadata and the corresponding design- and runtime-tools. Based on a cross NWAs MDAV-Definition, the corresponding metadata (subview and subquery definitions) may be generated and assigned to the corresponding NWA-Layer (NWA software component). At deployment and configuration time, the relevant views may be activated depending availability of underlying data. At runtime, an MDAV executer (e.g., a MDAV runtime engine) may run a distributed and optimized provisioning of reporting and analytics data. The data provisioning scheme may depend on selection parameters, filters, join conditions between parts in different NWAs, analytical functions defined in the report, and the locality of the data (local or remote).

The US 2013/036115 A1 discloses methods, systems, and computer program products for analyzing historic changes to business objects. One method includes monitoring at least one business object for a modification made to at least one business object node attribute. In response to a monitored modification associated with a particular business object node attribute, a new historical version of the at least one business object node attribute is prepared, the new historical version of the at least one business object node attribute including the modified business object node attribute value. A previous historical version of the at least one business object node attribute is retrieved and updated in response to the monitored modification. The new historical version of the at least one business object node attribute and the up-dated previous historical version of the at least one business object node attribute are then stored.

The US 2011/072007 A1 discloses a method of report caching. The method includes recording a user ID, a timestamp including at least a connection date and at least one SQL query associated with a report requested by a user from the database system for each connection of the user to the database system over a predetermined period. A plurality of intervals is defined in the predetermined period. Retrieved are instances of the user ID associated with connections of the user to the database system during at least a threshold number of the intervals based on a position that a current date associated with a current connection of the user to the database system occupies in a current interval. The at least one SQL query is executed to generate the report from the database system on the current date before request for the report from the user. The report is stored in a cache for user's retrieval.

### Summary

A computer-implemented technology for providing energy effective generating of analytical reports on end terminals is described herein. Generating of each analytical report requires digital processing of a respective set of data tables. As it will be clearly seen from description hereon execution of additional analytical scenarios may result in a reduction of a load of computer resources of a computer system and/or in a reduction of electrical power consumption by said computer system used for the generating of the analytical reports. This approach is of particular advantage, when the analytical reports are generated on a battery powered end terminal and the data tables required for the generation of one or more analytical reports are uploaded into memory of the end terminal from a remote terminal via a digital cellular telecommunication networks.

It is an objective of embodiments of the invention to provide for an end terminal configured to generate analytical reports by numerical processing of data tables using additional analytical scenarios, a computer-implemented method to perform the same, and a computer readable medium having stored thereon a computer executable code for execution by a microprocessor controlling an end terminal, wherein execution of the instructions of the executable code cause the microprocessor to execute said computer-implemented method. Advantageous embodiments are described in the dependent claims.

According to one embodiment, the present invention relates to a computer-implemented method of generating analytical reports on an end terminal. The end terminal comprises a processing unit and a memory. The database comprises data tables. Generating of each analytical report comprises digital processing of a respective table set of one or more of the data tables. The end terminal is configured to generate the analytical reports in an electrical power saving mode and in a standard electrical power consumption mode. An electrical power consumption of the end terminal in the electrical power saving mode is lower than an electrical power consumption of the end terminal in the standard electrical power consumption mode. A first generating of the analytical reports is performed in the electrical power saving mode and a second generating of the analytical reports is performed in the standard electrical power consumption mode. The computer-implemented method comprises: switching the end terminal into the standard electrical power consumption mode, causing the processing unit to perform the second generating of the analytical reports, switching the end terminal into the electrical power saving mode, and causing the processing unit to perform the first generating of the analytical reports.

The causing of the processing unit to perform the second generating of the analytical reports comprises: receiving from a user operating the end terminal a request of an analytical report; in a case when at least one data table of a respective table set needed for generation of the analytical report is not yet uploaded into the memory uploading into the memory from the database all missing data tables of the respective table set, which are not yet uploaded into the memory; and generating the analytical report using the respective table set in the memory.

The causing of the processing unit to perform the first generating of the analytical reports comprises: receiving from the user another request of another analytical report; in a case when another respective table set needed for generating of the analytical report is uploaded in the memory generating the another analytical report using the another respective table set in the memory; in a case when at least one data table of the another respective table set is not yet uploaded into the memory generating a list of alternative analytical repots, which may be generated using their respective table sets already uploaded in the memory; in a case when the user has selected one or more analytical reports from the list as alternative to the another requested analytical report generating the one or more selected analytical reports from the list using one or more respective table sets in the memory needed for the generation of the one or more selected analytical reports; and in a case when the user has not selected the one or more analytical reports from the first list as alternative to the another requested analytical report uploading into memory from the database all missing data tables of the another respective table set, which are not yet uploaded into the memory from the database, and generating the another requested analytical report using the another respective table set in the memory.

These features may be advantageous as they may provide two modes of operation of the end terminal generating analytical reports. In the electrical power saving mode the user is offered an alternative analytical scenario in a case when a report requested by the user requires uploading of one or more additional tables into the main memory. As a result thereof a load of computer resources of the end terminal and/or electrical power consumption of the end terminal may be reduced. This may be of particular advantage in a case when the end terminal is battery powered and the database comprising the data tables is on the remote terminal.

According to another embodiment the computer-implemented method further comprises: before the generating of the list executing the uploading into the memory from the database of the all missing data tables of the another respective table set in a case when an overall data volume of the all missing tables of the another respective table set is below a threshold data volume; wherein in the case when the user has not selected the one or more analytical reports from the list as alternative to the another requested analytical report and before the uploading into the memory from the database of the all missing data tables of the another respective table set the following is performed: generating all report sets of additional alternative analytical reports in a case when the generating of each of the report sets of the additional alternative analytical reports requires uploading into the memory from the database of one or more respective data tables having an overall data volume below the threshold data volume; in the case when the user has selected at least a portion of the analytical reports of one of the report sets uploading into memory from the database all not yet uploaded data tables needed for generating of the at least the portion of the analytical reports of the one of the report sets and generating the at least the portion of the analytical reports of the one of the report sets using all respective data tables in the memory; wherein the uploading into the memory from the database of the all missing tables of the another respective table set is performed in a case when the user has not selected the at least the portion of the analytical reports of the one of the report sets. These features may be advantageous as they further support prompting the user to use the resources more effectively. If the user does not select any of the reports which may be generated using data tables already up-loaded in the memory, an "intermediate" step is offered to the user. In this "intermediate" step a list of analytical reports is offered to the user, wherein generation of one or more analytical reports of said list, when selected by user, requires uploading of one or more data tables having overall data volume below a predetermined value. The threshold may be selected in accordance with (potentially) available resources of the end terminal and/or a battery charge level of the end terminal.

According to another embodiment the memory is a main memory of the end terminal, the main memory comprises an in-memory database, and the uploaded in the main memory data tables are stored the in-memory database.

According to another embodiment the processing unit comprises a microprocessor. The microprocessor operates in a microprocessor power saving mode, when the end terminal is switched into the electrical power saving mode. The microprocessor operates in a microprocessor standard power consumption mode, when the end terminal is switched into the standard electrical power consumption mode. The microprocessor operates at the first clock frequency, when the microprocessor operates in the processor power saving mode. The microprocessor operates at the second clock frequency when the microprocessor operates in the microprocessor standard power consumption mode. The second clock frequency is higher than the first clock frequency.

According to another embodiment a remote terminal comprises the database. The remote terminal is communicatively coupled to the end terminal via a cellular digital telecommunication network. The uploading into the memory from the database of any of the data tables is performed via the digital cellular telecommunication network. The end terminal further comprises a wireless terminal being configured to communicatively couple the end terminal to the remote terminal via the cellular digital telecommunication network. The wireless terminal is in an idle mode by default and in a data transmission mode. The uploading into the memory from the database of any of the data tables is executed via the digital cellular telecommunication network. An electrical power consumption of the wireless terminal in the idle mode is lower than an electrical power consumption of the wireless terminal in the data transmission mode. The electrical power consumption of the end terminal in the electrical power saving mode and in the standard electrical power consumption mode comprises the electrical power consumption of the wireless terminal in the idle mode when the wireless terminal is in the idle mode and the electrical power consumption of the end terminal in the electrical power saving mode and in the standard electrical power consumption mode comprises the electrical power consumption of the wireless terminal in the data transmission mode when the wireless terminal is in the data transmission mode.

According to another embodiment the uploading into the memory from the database of any of the data tables is executed in a framework of a respective communication request-response round between the database and the end terminal via the cellular digital telecommunication network, wherein a time average of a number of the communication request-response rounds generated when the end terminal is in the electrical power saving mode is less or equal to a time average number of the communication request-response rounds generated when the end terminal is in the standard electrical power consumption mode.

According to another embodiment, the present relation refers to a computer readable medium having stored thereon a computer executable code for execution by a processing unit controlling an end terminal, wherein execution of the instructions of the executable code causes the processing unit to execute a computer-implemented method according to any portion or all of the àforementioned embodiments.

According to another embodiment, the present invention relates to an end terminal comprising a processing unit and a memory. The end terminal is configured to generate analytical reports using data tables of the database in an electrical power saving mode and in a standard electrical power consumption mode. The generating of each analytical report comprises digital processing of a respective table set of one or more of the data tables. An electrical power consumption of the end terminal in the electrical power saving mode is lower than an electrical power consumption of the end terminal in the standard electrical power consumption mode. A first generating of the analytical reports is performed in the electrical power saving mode and a second generating of the analytical reports is performed in the standard electrical power consumption mode. The processing unit is configured to perform the following: switching the end terminal into the standard electrical power consumption mode, causing the end terminal to perform the second generating of the analytical reports, switching the end terminal into the electrical power saving mode, causing the end terminal to perform the first generating of the analytical reports.

The causing of the end terminal to perform the second generating of the analytical reports comprises: receiving from a user operating the end terminal a request of an analytical report; in a case when at least one data table of a respective table set needed for generation of the analytical report is not yet uploaded into the memory uploading into the memory from the database all missing data tables of the respective table set, which are not yet uploaded into the memory; and generating the analytical report using the respective table set in the memory.

The causing of the end terminal to perform the first generating of the analytical reports comprises: receiving from the user another request of another analytical report, in a case when another respective table set needed for generating of the analytical report is already uploaded in the memory generating the another analytical report using the another respective table set in the memory, in a case when at least one data table of the another respective table set is not yet uploaded into the memory generating a list of alternative analytical repots, which may be generated using their respective table sets uploaded in the memory; in a case when the user has selected one or more analytical reports from the list as alternative to the another requested analytical report generating the one or more selected analytical reports from the list using one or more respective table sets in the memory needed for the generation of the one or more selected analytical reports; and in a case when the user has not selected the one or more analytical reports from the list as alternative to the another requested analytical report uploading into memory from the database all missing data tables of the another respective table set, which are not yet uploaded into the memory from the database, and generating the another requested analytical report using the another respective table set in the memory.

According to another embodiment, the processing unit is further configured to perform the following: before the generating of the list executing the uploading into the memory from the database of the all missing data tables of the another respective table set in a case when an overall data volume of the all missing tables of the another respective table set is below a threshold data volume; wherein in the case when the user has not selected the one or more analytical reports from the list as alternative to the another requested analytical report and before the uploading into the memory from the database of the all missing data tables of the another respective table set the following is performed: generating all report sets of additional alternative analytical reports in a case when the generating of each of the report sets of the additional alternative analytical reports requires uploading into the memory from the database of one or more respective data tables having an overall data volume below the threshold data volume; in the case when the user has selected at least a portion of the analytical reports of one of the report sets uploading into memory from the database all not yet uploaded data tables needed for generating of the at least the portion of the analytical reports of the one of the report sets and generating the at least the portion of the analytical reports of the one of the report sets using all respective data tables in the memory; wherein the uploading into the memory from the database of the all missing tables of the another respective table set is performed in a case when the user has not selected the at least the portion of the analytical reports of the one of the report sets.

Another embodiment of the present invention relates to a system comprising:a computer processor, a first database system coupled to the computer processor, the first database system comprising a plurality of tables, and a second database system coupled to the computer processor. The second database system comprises a subset of the tables in the first database system. The computer processor is operable to identify a plurality of reports that are currently generated using the second database system. The computer processor is operable to identify a plurality of reports that are not currently generated using the second database system but that are capable of being generated using the second database system. The computer processor is operable to display on a computer display device the plurality of reports that are not currently generated using the second database system but that are capable of being generated using the second database system.

According to another embodiment the computer processor is operable to create the second database system by transmitting the subset of tables from the first database system to the second database system.

According to another embodiment the transfer of the subset of tables from the first database system to the second database system is executed in real time when a need arises on the second database system for the subset of tables.

According to another embodiment, the computer processor is operable to: generate a first list of the plurality of reports currently generated using the second database system, generate a second list of the plurality of reports that are capable of being generated using the second database system, compare the first list to the second list, and display on the computer display device a third list comprising reports that appear on the second list but that do not appear on the first list.

According to another embodiment the computer processor is operable to receive input from a user selecting one or more of the reports from the third list, generate the selected reports, and display the generated reports to the user.

According to another embodiment a report is capable of being generated using the second database system based on a presence of all tables required for the generation of the report capable of being generated already being present on the second database system, wherein the all tables are already being present on the second database system because the all tables are used for generation of one or more of the reports currently being generated.

According to another embodiment the computer processor is operable to: receive input identifying an additional report to be generated, the additional report to be generated requiring one or more tables that are not on the second database system, identify the one or more tables that are not on the second database system and that are needed to generate the additional report, determine the size of each of the one or more tables that are not on the second database system and that are needed to generate the additional report, and display on the computer display device the one or more tables and the size of the one or more tables that are not on the second database system and that are needed to generate the additional report.

According to another embodiment the computer processor is operable to display the one or more reports that are currently not generated using the second database system sorted by number of additional tables that are required to generate an additional report and size of additional tables needed to generate the additional report, wherein the computer processor is operable to receive an input indicating one or more additional reports to generate, wherein the computer processor is operable to transfer one or more tables required for generation of the additional reports from the first database system to the second database system.

Another embodiment of the present invention relates to a computer-implemented method comprising: identifying a plurality of reports that are currently generated using a second database system; identifying a plurality of reports that are not currently generated using the second database system but that are capable of being generated using the second database system; displaying on a computer display device the plurality of reports that are not currently generated using the second database system but that are capable of being generated using the second database system; generating a first list of the plurality of reports currently generated using the second database system; generating a second list of the plurality of reports that are capable of being generated using the second database system; comparing the first list to the second list; displaying on the computer display device a third list comprising reports that appear on the second list but that do not appear on the first list; receiving input from a user selecting one or more of the reports from the third list; generating the selected reports; displaying the generated reports to the user; receiving input identifying an additional report to be generated, the additional report to be generated requiring one or more tables that are not on the second database system; identifying the one or more tables that are not on the second database system and that are needed to generate the additional report; determining the size of each of the one or more tables that are not on the second database system and that are needed to generate the additional report; displaying on the computer display device the one or more tables and the size of the one or more tables that are not on the second database system and that are needed to generate the additional report; displaying the one or more reports that are currently not generated using the second database system sorted by number of additional tables that are required to generate an additional report and size of additional tables needed to generate the additional report; receiving an input indicating one or more additional reports to generate; and transferring one or more tables required for generation of the additional reports from a first database system to the second database system.

### Brief Description of the Drawings

**FIG. 1** is a block diagram of an example embodiment of a business suite application reporting system.
**FIG. 2** is a block diagram illustrating a number of reports and the tables needed to generate those reports.
**FIG. 3** is a block diagram illustrating a number of reports and the tables needed to generate those reports.
**FIGS. 4A** and **4B** are block diagrams of a process for generating analytic reports on a computer system.
**FIG. 5** is a block diagram illustrating a computer system.
**FIG. 6** is a block diagram illustrating an end terminal and a remote terminal.
**FIG. 7** is a block diagram of a process for generating analytic reports on an end terminal.
**FIG. 8** is a block diagram of a process for generating analytic reports on an end terminal.
**FIGS. 9a** and **9b** is a block diagram of a process for generating analytic reports on an end terminal.

### Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, electrical, and optical changes may be made without departing from the scope of the present invention. The following description of example embodiments is, therefore, not to be taken in a limited sense, and the scope of the present invention is defined by the appended claims.

An embodiment is a mechanism and a tool that allows a user or customer of a suite of business applications that is executed on a particular system or sub-system to calculate information about analytical scenarios that could be added with a small amount of additional effort. The system or sub-system could include as one part a traditional database system, and as a second part an in-memory database system. An example of such an in-memory database system is the HANA^{®} in-memory system of SAP^{®}.

An algorithm determines the tables that would be needed in this additional effort (dependent tables), retrieves the tables on the system or sub-system that are used for currently-generated reports (replicated tables), and compares both sets of tables.

This comparison generates a list and recommendation for the user/customer relating to how the scenarios can be enhanced efficiently. This information is integrated in a tool and provided to the user.

In a current solution, a user/customer would need to analyze all views/reports in an in-memory database or other database system and determine the table dependencies manually. The user/customer would need to analyze the in-memory database internal information and
understand the internal processing of the views (*i.e*., reports). However, to address these issues, an embodiment enables the user/customer to acquire this information calculated by an algorithm and provided in an end-user tool. This end user tool can be integrated into standard administration tools.

In an embodiment, an in-memory database is used to execute the business suite applications and to generate reports from those business suite applications. A traditional server database is normally part of such a system, and includes a server-based database. The server-based database normally includes the complete database of the system, and the in-memory database includes the tables that are needed to generate the reports of the business suite applications. The tables are loaded into the in-memory database by transferring the tables from the server-based database to the in-memory database.

An in-memory database allows an integration of transactional (online transactional processing (OLTP)) and analytical (online analytical processing (OLAP)) processes in one database platform. The in-memory database makes it possible to run applications, especially analytical applications, directly on the in-memory database without the need for an application server. Such an in-memory database can consist of several parts. First of all, there is the in-memory database itself, which is an in-memory database with column and row store capabilities. The database allows high-performance processing and analysis of data already on the database and therefore prevents the necessity of transferring data from the database to an application server. With in-memory technology, it is possible to push performance-critical parts of the business logic down to the database.

In an embodiment, the in-memory database can include an administration and development tool. Additional parts include tools for the integration of data from other databases, especially from databases running a business suite system. Such a tool can be delivered to a user/customer as an appliance, that is, a combination of specific hardware and software. The in-memory database allows the implementation of analytical scenarios on top of the database schema of the business suite applications that originated from a transactional scope. With this approach, it is possible to add additional functionality without changing the existing data structure and processes.

A business suite application system landscape can be used in at least two different deployment options. First, the in-memory database can be used as the primary database of the business suite system thereby replacing any other standard database product. This scenario enables direct analytical access to the data stored in the business suite system via analytic software tools. As this deployment option needs the installation of the in-memory database in the business suite system, it is mainly useful if the in-memory system is installed initially or if the in-memory system is changed in some manner (*e.g*., due to a system upgrade).

If the business suite system is to be kept stable, but the opportunities of the in-memory database also shall be used as well, a second deployment option is available. In this option, the in-memory database is installed as a secondary database side-by-side to the existing business suite system. The data of the business suite system that are needed for the analytical applications are replicated in real-time to the in-memory database. Consequently, they are always in synch with the original system. The analytical applications are then executed on the in-memory database and the existing business suite system is not influenced or changed. This disclosure focuses on the side-by-side scenario and proposes a mechanism to enable an effective usage of the scenario in an existing user/customer landscape. While the present disclosure focuses on an in-memory database and analytical scenarios implemented on an in-memory database platform, in general, the disclosed embodiments would work in connection with any other relational databases.

The analytic software tools that are to be used in connection with the in-memory database provide easily generated analytical reports and applications for business suite data. The analytical data model supporting these scenarios is implemented in in-memory database views. The new analytical data model need not change an existing business suite data model, and it need not change any business suite data. Consequently, it is optional and completely non-disruptive. To benefit from the new data model, data don't need to be extracted and there is no additional persistence needed. The data model is based on the original (existing) data.

The data model is easily understandable and can be accessed via standard access protocols like MDX and SQL. Users/customers can easily extend the data model for their own specific purposes. The data model will therefore be the enabler for an openness and flexibility in the analytic world. Every analytic software tool that is able to connect via SQL or MDX (like MS Excel^{®}, Crystal Reports^{®}, or Business Object Explorer®) can be used to directly access the data model for analytics and reporting on operational data.

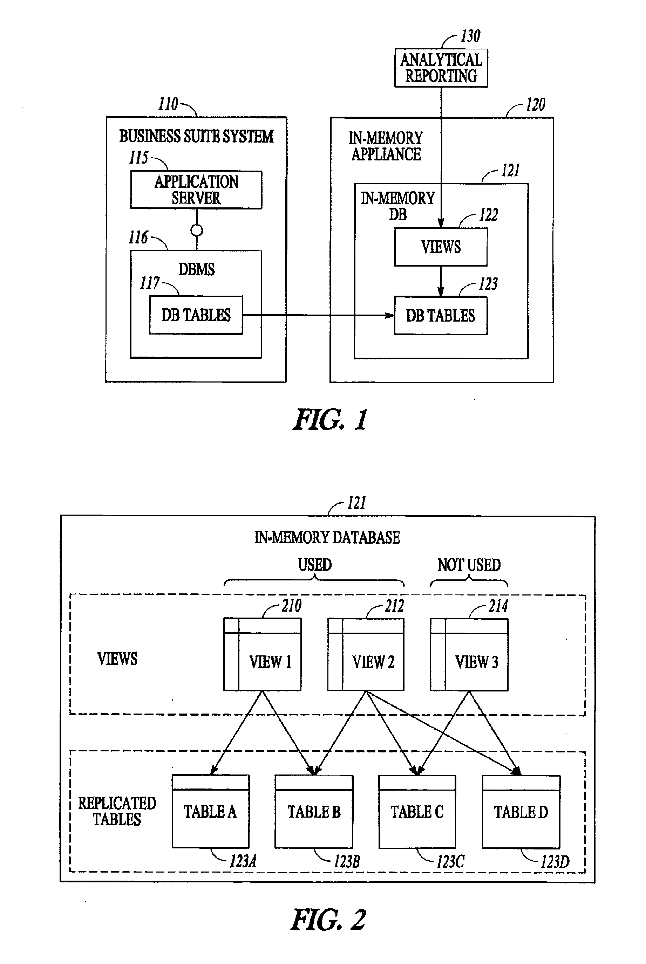

**FIG. 1** illustrates the side-by-side embodiment that was mentioned above. A business suite system **110** includes an application server **115** and a database management system **116.** The database management system **116** includes database tables **117**. The database tables**117** are replicated from the existing business application system **110**into an in-memory tool **120.** The in-memory tool **120** includes an in-memory database **121,** database tables **123** (which were replicated onto the in-memory system from the business suite database tables **117**), and views or reports **122.** An analytical reporting tool **130** provides a user/customer with a means to query the reports/views **122.**

In the side-by-side embodiment, the user/customer uses the analytical data model and the reports associated with this model on top of an in-memory database that is installed separately on an existing application system. The data that are needed for the analytical model are replicated to the in-memory database **123** on a table per table basis. Each replicated table consumes memory of the in-memory database**121**, which is a critical and potentially expensive resource. Also, the table replication itself causes some load on the connected backend system**110** and the replication tool. Therefore, users/customers don't replicate all tables of an application system**110**. Rather, the users/customers focus on the tables that are relevant for their specific analytical scenarios, *i.e.,* the reports that they want to run and consequently the views that support the reports. There is consequently a clear connection between the reports that are used and the underlying views and the tables that are needed for these reports/views.

Based on the tables that are available in the in-memory database, a specific set of views and reports are executable. Typically, a user/customer first defines a set of reports to be used, then identifies the needed tables, and then finally replicates the needed tables. If a user/customer subsequently would like to add additional reports, the user/customer must check which tables are needed for the new reports, and then determine if they are already available in the in-memory database. If they are not already available in the in-memory database, these tables need to be added to the list of replicated tables, which results in additional needs for storage and execution resources. These additional needs might be compared to the benefits of the new report, and a decision might be made if the additional reports shall be set up at all.

On the other hand, the tables that are available might already support several additional reports that the user/customer doesn't use currently, or it might be possible to enable additional reports via adding a small number of tables to the replication.

However, if the user/customer cannot easily access this information, and/or the user/customer is not supported in analyzing these further opportunities, the user/customer might never find out about additional capabilities that could be added with no or only small effort. This means that a user's/customer's investment in an in-memory database and its associated processes is not used as efficiently as possible. An embodiment closes this gap and enables the user/customer to analyze the report/database schema and to make the most efficient use of the current report/database schema.

An embodiment that closes the gap between a current situation in a user/customer system landscape and the possible extensions of the analytical reporting is based on analyzing the dependencies between the analytical views and their needed tables, and to comparing this to the currently available tables**123** in the in-memory database system **120.** This comparison can determine the additional reporting that can be executed based on the current list of tables**123**,and can further determine the additional reporting that can be executed with only small changes to the current table list. The following portion of the disclosure first discloses an algorithm to calculate the relevant information, and then secondly discloses a tool to display and use the information.

An algorithm for the analysis determines a first list of tables that are needed, on a per report or per view basis, to generate reports that could be available to a user but that are not currently being used by the user. The algorithm then compares this first list of tables to a second list of tables that are currently being used by the user to generate the current reports for the user. This comparison generates an outcome that is a list of reports or views that could be executed using only the currently available tables. That is, with no additional effort in the replication of databases. This information is of interest to the user/customer and can be provided via the tool disclosed below. In addition, the algorithm can calculate for each view how many and which additional tables (from the database tables **117**) are needed for the reports or views that cannot be executed in the current situation. For each of the tables, the algorithm can also retrieve information about the table size from the relevant source system**110**.All the information is then handed over to the tool that provides the information to the user/customer and makes proposals regarding the reports or views that can be added with little effort and little additional cost.

**FIG. 2** illustrates an example of the relationship between views/reports and database tables in an in-memory database. In general, as noted, a list of all views (reports) and relevant tables is created, and a list of all views that are currently not used by a user/customer (but that could be used based on the available tables (**123**)) is created. For example, referring to **FIG. 2****,** View 1 (**210**) is used by the user/customer and requires tables A (**123A**) and B (**123B**) for its generation. Similarly, View 2 (**212**) is used by the user/customer and requires tables B (**123B**), C (**123C**), and D (**123D**) for its generation. View 3 is not currently being used by the user/customer, but since it only requires tables C and D for its generation, which are already available via the replication of tables C and D, view 3 could be generated without the need of further tables. Consequently, the tool can recommend to the user/customer that the user/customer consider using view 3 in addition to views 1 and 2.

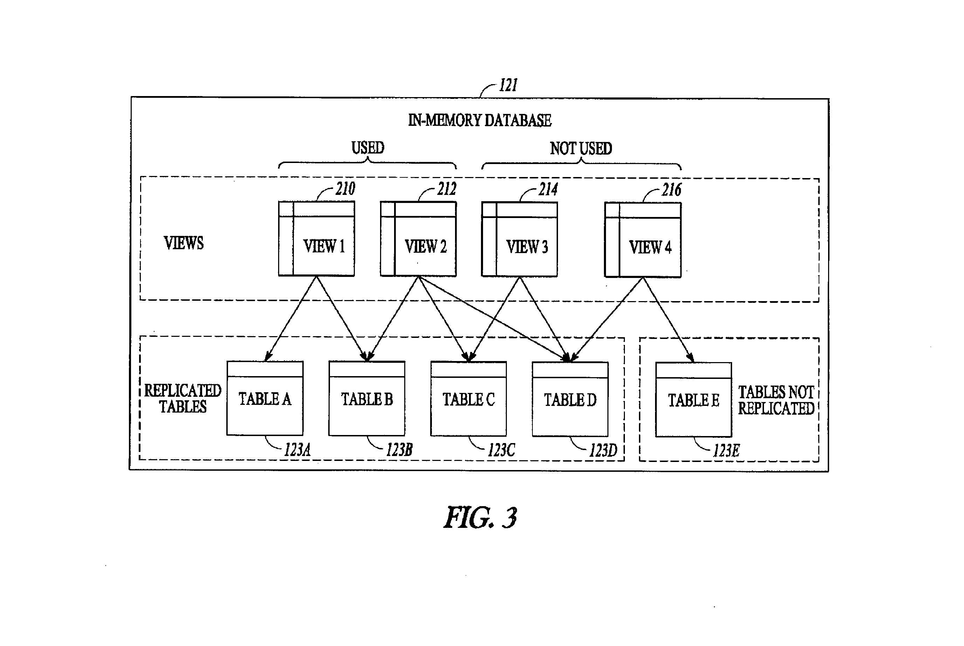

In another embodiment, the tool creates a list of tables that are needed, for each view that is not currently used by a user/customer, in addition to the tables that are already in the in-memory database **121,** and calculates the size of the needed additional tables. For example, referring to **FIG. 3****,** view 4 (**216**) is not currently used and requires tables D (**123D**) and E (**123E**) for its generation. As illustrated in **FIG. 3****,** table E is not currently one of the replicated tables that are in the in-memory database **121.** Consequently, view 4 cannot currently be generated. The tool reports this information to the user/customer, and additionally reports the size of table E.

The user/customer can then use this information to decide whether the effort and cost of replicating and storing table E in the on-line database is justified by the business benefits provided by view 4.

The tool takes the information calculated by the algorithm/mechanism/process disclosed above and presents it to the user/customer. The user/customer can filter the list of reports and views for specific areas of interest such that only reports or views of interest to the user/customer are displayed. The tool displays the reports and views, and the user/customer can directly and immediately execute the reports and views. In an embodiment, the tool allows directly calling the report or view from the tool itself to test and evaluate the report or view.

Next, the tool presents the reports or views that cannot currently be executed but that need only a small number of additional tables for their execution. This list can be sorted according to the number of additional tables needed. The tool can also display the overall size of the additional tables that are needed per report or view.

The size can also be used as sorting criteria because the table size is the main driver for resource consumption.

The tool allows a user/customer to select specific views or reports that upon selection are enabled, and the tool calculates the list of needed tables for these views or reports. This list can be handed over to the relevant replication process, so the tables can be added without further effort. Once the tables are available and the user starts the analysis again, the added views or reports appear in the list of executable views or reports.

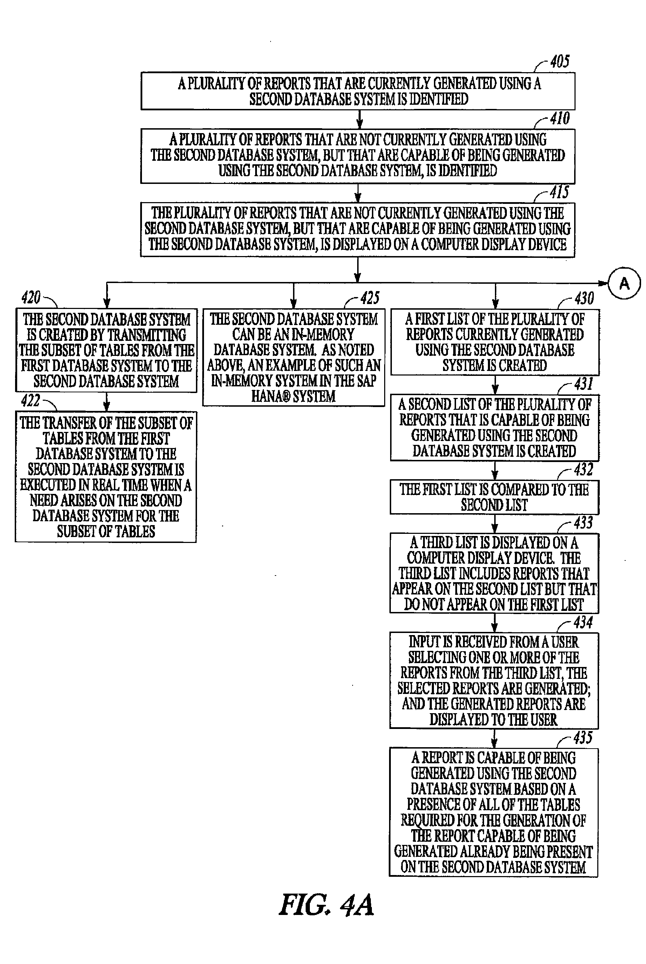

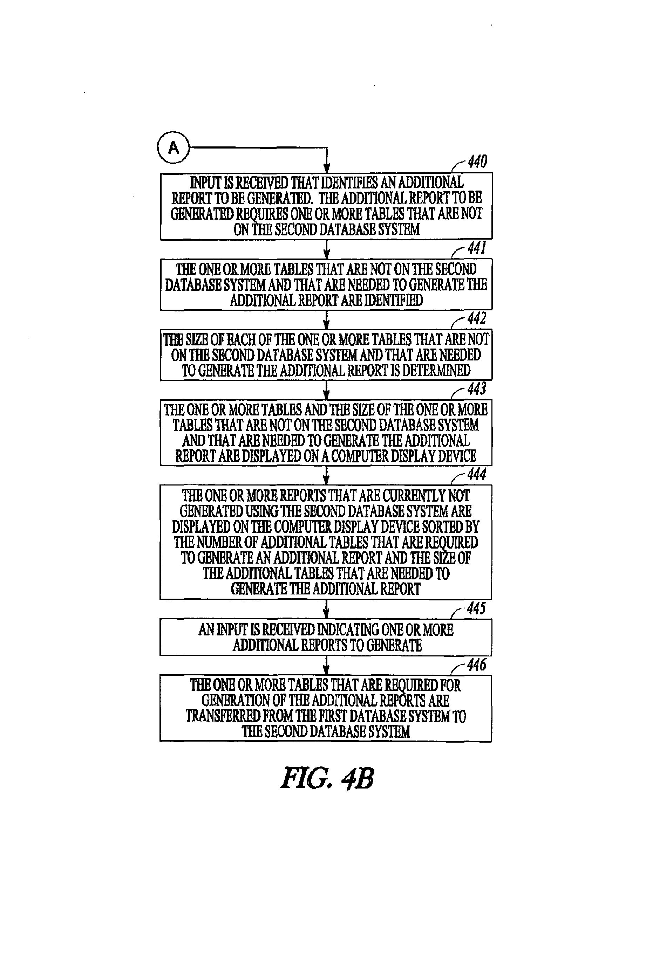

**FIGS. 4A** and **4B** illustrate in a block diagram the above-disclosed processes and mechanisms for generating analytic reports on a computer system, and in particular, a computer system that includes an in-line memory database for the generation of the reports. **FIGS. 4A** and **4B** include a number of process blocks **405-446.**

Though arranged serially in the example of **FIGS. 4A** and **4B****,** other examples may reorder the blocks, omit one or more blocks, and/or execute two or more blocks in parallel using multiple processors or a single processor organized as two or more virtual machines or sub-processors. Moreover, still other examples can implement the blocks as one or more specific interconnected hardware or integrated circuit modules with related control and data signals communicated between and through the modules. Thus, any process flow is applicable to software, firmware, hardware, and hybrid implementations.

Referring to **FIGS. 4A** and **4B****,** at **405,** a plurality of reports that are currently generated using a second database system is identified. At **410,** a plurality of reports that are not currently generated using the second database system, but that are capable of being generated using the second database system, is identified. At **415,** the plurality of reports that are not currently generated using the second database system, but that are capable of being generated using the second database system, is displayed on a computer display device.

At **420,** the second database system is created by transmitting a subset of tables from a first database system to the second database system. At **422,** the transfer of the subset of tables from the first database system to the second database system is executed in real time when a need arises on the second database system for the subset of tables.

It is noted at block **425** that the second database system can be an in-memory database system. As noted above, an example of such an in-memory system in the SAP HANA^{®} system.

Blocks **430-435** illustrate in greater detail a manner to determine the plurality of reports that are not currently generated using the second database system, but that are capable of being generated using the second database system. At **430,** a first list of the plurality of reports currently generated using the second database system is created. At **431,** a second list of the plurality of reports that is capable of being generated using the second database system is created. At **432,** the first list is compared to the second list. At **433,** a third list is displayed on a computer display device. The third list includes reports that appear on the second list but that do not appear on the first list. At **434,** input is received from a user selecting one or more of the reports from the third list, the selected reports are generated; and the generated reports are displayed to the user. At **435,** a report is capable of being generated using the second database system based on a presence of all of the tables required for the generation of the report capable of being generated already being present on the second database system. All of the tables are already present on the second database system because all of the tables are used for generation of one or more of the reports that are currently generated. In other words, all the tables needed for an additional report are already on the second database system because they are needed for the reports that are currently generated.

Blocks **440-446** illustrate in greater detail a manner to determine the plurality of reports that are not currently generated using the second database system, but that could be generated with a small amount of effort (such as by replicating a relatively small table from the first database system to the second database system). At **440,** input is received that identifies an additional report to be generated. The additional report to be generated requires one or more tables that are not on the second database system. At **441,** the one or more tables that are not on the second database system and that are needed to generate the additional report are identified. At **442,** the size of each of the one or more tables that are not on the second database system and that are needed to generate the additional report is determined. At **443,** the one or more tables and the size of the one or more tables that are not on the second database system and that are needed to generate the additional report are displayed on a computer display device. At **444,** the one or more reports that are currently not generated using the second database system are displayed on the computer display device sorted by the number of additional tables that are required to generate an additional report and the size of the additional tables that are needed to generate the additional report. At **445,** input is received indicating one or more of the additional reports to generate, and at **446,** the one or more tables that are required for generation of the additional reports are transferred from the first database system to the second database system.

In summary, a disclosed embodiment enables users/customers of an in-line database (or other relational database) to make the most efficient usage of the in-memory resources in order to maximize the benefits without needed additional investments into hardware. The embodiments include an algorithm and a user tool, thereby allowing an evaluation of the maximal usage scope of the user'slcustomer's current system.

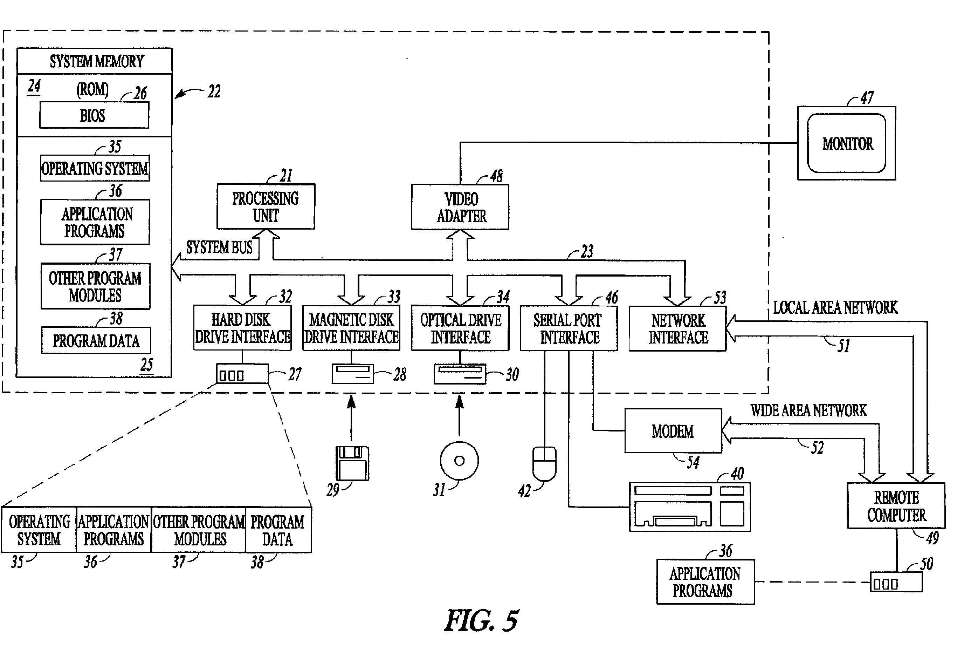

**FIG. 5** is an overview diagram of hardware and an operating environment in conjunction with which embodiments of the invention may be practiced. The description of **FIG. 5** is intended to provide a brief, general description of suitable computer hardware and a suitable computing environment in conjunction with which the invention may be implemented. In some embodiments, the invention is described in the general context of computer-executable instructions, such as program modules, being executed by a computer, such as a personal computer. Generally, program modules include routines, programs, objects, components, data structures, etc., that perform particular tasks or implement particular abstract data types.

Moreover, those skilled in the art will appreciate that the invention may be practiced with other computer system configurations, including hand-held devices, multiprocessor systems, microprocessor-based or programmable consumer electronics, network PCs, minicomputers, mainframe computers, and the like. The invention may also be practiced in distributed computer environments where tasks are performed by I/O remote processing devices that are linked through a communications network. In a distributed computing environment, program modules may be located in both local and remote memory storage devices.

In the embodiment shown in **FIG. 5****,** a hardware and operating environment is provided that is applicable to any of the servers and/or remote clients shown in the other Figures.

As shown in **FIG. 5****,** one embodiment of the hardware and operating environment includes a general purpose computing device in the form of a computer **20** (*e.g*., a personal computer, workstation, or server), including one or more processing units **21,** a system memory **22,** and a system bus **23** that operatively couples various system components including the system memory **22** to the processing unit **21.** There may be only one or there may be more than one processing unit **21,** such that the processor of computer **20** comprises a single central-processing unit (CPU), or a plurality of processing units, commonly referred to as a multiprocessor or parallel-processor environment. A multiprocessor system can include cloud computing environments. In various embodiments, computer **20** is a conventional computer, a distributed computer, or any other type of computer.

The system bus **23** can be any of several types of bus structures including a memory bus or memory controller, a peripheral bus, and a local bus using any of a variety of bus architectures. The system memory can also be referred to as simply the memory, and, in some embodiments, includes read-only memory (ROM) **24** and random-access memory (RAM) **25.** A basic input/output system (BIOS) program **26,** containing the basic routines that help to transfer information between elements within the computer **20,** such as during start-up, may be stored in ROM **24.** The computer **20** further includes a hard disk drive **27** for reading from and writing to a hard disk, not shown, a magnetic disk drive **28** for reading from or writing to a removable magnetic disk **29,** and an optical disk drive **30** for reading from or writing to a removable optical disk **31** such as a CD ROM or other optical media.

The hard disk drive **27,** magnetic disk drive **28,** and optical disk drive **30** couple with a hard disk drive interface **32,** a magnetic disk drive interface **33,** and an optical disk drive interface **34,** respectively. The drives and their associated computer-readable media provide non volatile storage of computer-readable instructions, data structures, program modules and other data for the computer **20.** It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), redundant arrays of independent disks (*e.g*., RAID storage devices) and the like, can be used in the exemplary operating environment.

A plurality of program modules can be stored on the hard disk, magnetic disk **29,** optical disk **31,** ROM **24,** or RAM **25,** including an operating system **35,** one or more application programs **36,** other program modules **37,** and program data **38.** A plug in containing a security transmission engine for the present invention can be resident on any one or number of these computer-readable media.

A user may enter commands and information into computer **20** through input devices such as a keyboard **40** and pointing device **42.** Other input devices (not shown) can include a microphone, joystick, game pad, satellite dish, scanner, or the like.

These other input devices are often connected to the processing unit **21** through a serial port interface **46** that is coupled to the system bus **23,** but can be connected by other interfaces, such as a parallel port, game port, or a universal serial bus (USB). A monitor **47** or other type of display device can also be connected to the system bus **23** via an interface, such as a video adapter **48.** The monitor **47** can display a graphical user interface for the user. In addition to the monitor **47,** computers typically include other peripheral output devices (not shown), such as speakers and printers.

The computer **20** may operate in a networked environment using logical connections to one or more remote computers or servers, such as remote computer **49.**

These logical connections are achieved by a communication device coupled to or a part of the computer **20;** the invention is not limited to a particular type of communications device. The remote computer **49** can be another computer, a server, a router, a network PC, a client, a peer device or other common network node, and typically includes many or all of the elements described above I/0 relative to the computer **20,** although only a memory storage device **50** has been illustrated. The logical connections depicted in **FIG. 5** include a local area network (LAN) 51 and/or a wide area network (WAN) **52.** Such networking environments are commonplace in office networks, enterprise-wide computer networks, intranets and the internet, which are all types of networks.

When used in a LAN-networking environment, the computer **20** is connected to the LAN **51** through a network interface or adapter **53,** which is one type of communications device. In some embodiments, when used in a WAN-networking environment, the computer **20** typically includes a modem **54** (another type of communications device) or any other type of communications device, *e.g*., a wireless transceiver, for establishing communications over the wide-area network **52,** such as the internet.

The modem **54,** which may be internal or external, is connected to the system bus 23 via the serial port interface **46.** In a networked environment, program modules depicted relative to the computer **20** can be stored in the remote memory storage device **50** of remote computer, or server **49.** It is appreciated that the network connections shown are exemplary and other means of, and communications devices for, establishing a communications link between the computers may be used including hybrid fiber-coax connections, T1-T3 lines, DSL's, OC-3 and/or OC-12, TCP/IP, microwave, wireless application protocol, and any other electronic media through any suitable switches, routers, outlets and power lines, as the same are known and understood by one of ordinary skill in the art.

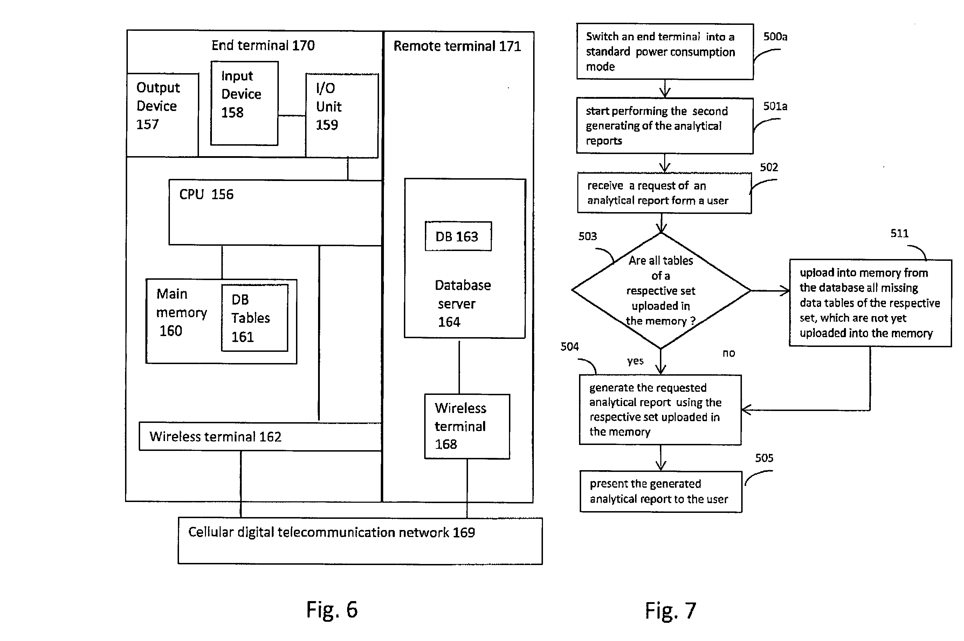

Fig. 6 illustrates an end terminal comprising a processing unit 156 and a memory 160. The end terminal is configured to generate analytical repots. Generating of each analytical report comprises digital processing on the end terminal of a respective table set of one or more data tables. The end terminal is configured to generate the analytical reports in an electrical power saving mode and in a standard electrical power consumption mode. An electrical power consumption of the end terminal in the electrical power saving mode is lower than an electrical power consumption of the end terminal in the standard electrical power consumption mode. A first generating of the analytical reports is performed in the electrical power saving mode and a second generating of the analytical reports is performed in the standard electrical power consumption mode. The end terminal may further comprise an I/O unit 159 operated by the processing unit 156. The I/O unit 159 operates one or more input devices 158 and one or more output devices 157.The input and output devices (such as keyboard, display, joystick, touchscreen etc.) are used for input of user commands and for displaying to the user information related to execution of the user commands and operation of the end terminal. For instance the display may display the level of the battery charge of the end terminal in a case when the end terminal is battery powered. It may further display lists of analytical reports, analytical reports themselves, and any auxiliary information. The memory 160 is configured to store the data tables used for the generation of the analytical reports. The memory may be but is not limited to a hard disk drive (HDD), solid state disk drive and a main memory of the end terminal such as a dynamic random access memory (DRAM) or a static random access memory (SRAM). In case when the memory is the main memory of the end terminal the memory may comprise an in-memory database used for storing and digital processing of the data tables. The end terminal may be but is not limited to a smartphone, a tablet, a laptop, a personal computer. The end terminal may be any computer system configured to generate the analytical reports by digital processing of the data tables uploaded into its main memory.

The end terminal 170 is communicatively coupled to the database 163, wherein all data tables, which may be used for the generating of any analytical report requested by the user, are stored. A table set of the data tables is uploaded into the memory of the end terminal from the database 163, when the user requests a respective analytical report, which generation requires digital processing of said table set. The database 163 may be on a database server 164. A remote terminal 171 may comprise the database server 164. The remote terminal 171 and the end terminal 170 may use respective communication terminals 168 and 162 for the communicative coupling of the database to the end terminal. The communicative coupling of the end terminal to the remote terminal may be implemented via a computer network such as Ethernet, WiFi, and/or digital cellular telecommunication network, etc. In a case when the communicative coupling is performed by the digital cellular telecommunication network169 the communication terminals 162 and 168 are wireless terminals.

The wireless terminal 162 of the end terminal 170 is in an idle mode by default and in a data transmission mode when the uploading into the memory 160 from the database 163 of any of the data tables is executed via the digital cellular telecommunication network 169. An electrical power consumption of the wireless terminal 162 in the idle mode is lower than an electrical power consumption of the wireless terminal 162 in the data transmission mode. The electrical power consumption of the end terminal 170 in the electrical power saving mode and in the standard electrical power consumption mode comprises the electrical power consumption of the wireless terminal 162 in the idle mode when the wireless terminal is in the idle mode. The electrical power consumption of the end terminal 170 in the electrical power saving mode and in the standard electrical power consumption mode comprises the electrical power consumption of the wireless terminal 162 in the data transmission mode when the wireless terminal is in the data transmission mode.

Uploading into the memory 160 from the database 163 of one or more of the data tables may be executed in a framework of a respective communication request-response round between the database and the end terminal via the cellular digital telecommunication network, wherein a time average of a number of the communication request-response rounds generated when the end terminal is in the electrical power saving mode is less or equal to a time average number of the communication request-response rounds generated when the end terminal is in the standard electrical power consumption mode. The averaging over time has to be calculated over statistically meaningful number of the communication request-response rounds. For instance, the number of request response rounds used for calculating of the time average of the number of the request-response rounds may be in the interval from 10 to 100. The formulation "less or equal" used above addresses all possible scenarios including "the worst case scenario." As it will be clearly seen from further description "the worst case scenario" may be realized as follows. The sequence of analytical reports requested by the user may require uploading of 10 data tables in 10 respective communication request-response rounds with independent of the operating mode of the end terminal (the standard electrical power consumption mode or electrical power saving mode). The reduction of communication request-response rounds contributes further to the reduction of the electrical power consumption by the end terminal in direct and indirect way, because the electrical energy is consumed by the wireless terminal 162 not only during receiving of a data of a data table but it is further consumed by the end terminal 162 for establishing request-response round needed for receiving of said table and for closing of said request-response round.

The processing unit may comprise a computer microprocessor. The microprocessor operates in a microprocessor power saving mode when the end terminal is switched into the electrical power saving mode. The microprocessor operates in a microprocessor standard power consumption mode when the end terminal is switched into the standard electrical power consumption mode. The microprocessor operates at the first clock frequency when the microprocessor operates in the processor power saving mode. The microprocessor operates at the second clock frequency when the microprocessor operates in the microprocessor standard power consumption mode. The second clock frequency is higher than the first clock frequency.

Fig. 7 illustrates a process of generating analytical reports on the end terminal 170 in the standard electrical power consumption mode. In a process block 500a the end terminal is switched into the standard electrical power consumption mode. Then a process block 501a is executed, wherein the end terminal is switched into mode of the second generation of the analytical reports. The following process blocks are executed in this mode. In a process block 502 a user request for an analytical report is received. It may be received via one of the input devices 158 of the end terminal 170 mentioned above. Afterwards a respective table set of the data tables needed for generating of the requested analytical report is identified. In may be identified in a different ways. For instance, an overall list of reports and their respective table sets of the data tables may be generated upfront by the database server 164 and uploaded to the end terminal for providing to the user a full spectrum of analysis that may be performed using the database. Alternatively, the description of data tables may be uploaded on the end terminal. In this case one or more of the analytical software tools (see description above) operating on the end terminal may identify the table set of data tables needed for the generating of the analytical report requested by user by using the descriptions of the data tables uploaded on the end terminal. A decision process block 503 causes execution of the process block 504 if all tables of the respective table set are already uploaded in the memory 160 of the end terminal 170, otherwise the decision process block 503 causes execution of a process block 511. This decision process block is needed because a least a portion of said table set may be already uploaded in the memory 160 during processing of previous user requests of other analytical reports and/or a portion of the data tables of the database may be uploaded into the memory of the end terminal in advance.

For instance, said portion may comprise the data tables, which are most frequently used for the generating of the analytical reports. In the process block 511 all missing data tables of said table set, which were not yet uploaded in the memory are uploaded from the database 163 in the memory 160. Afterwards in the process block 504 the analytical report is generated by one or more of the analytical software tools on the end terminal 170 using said table set of the data tables in the memory 160. In a process block 505 the generated analytical report is presented to the user via the output device 157.

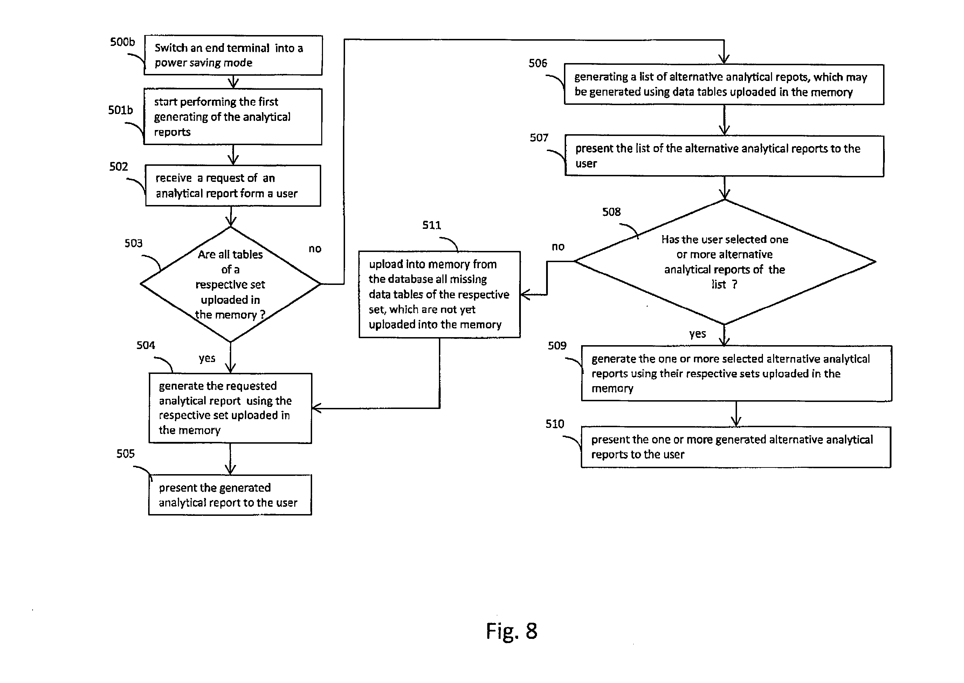

Fig. 8 illustrates a process of the generating of the analytical reports on the end terminal 170 in the electrical power saving mode. In a process block 500b the end terminal is switched into the electrical power saving mode consumption mode. Then a process block 501a is executed, wherein the end terminal is switched into mode of the first generation of the analytical reports. The following process blocks are executed in this mode. The process block 502 is the same as described above. It is executed after the process block 501 b. A decision process block 503 causes execution of the process blocks 504 and 505 as described above, if all data tables needed for the generation of the analytical report requested by user are already uploaded into the memory 160. The decision process block 503 cases execution of a process block 506, if not all data tables needed for the generation of the analytical report requested by user are uploaded in the memory 160. In the process block 506 a list of alternative analytical repots is generated. The list of the alternative analytical reports comprises all analytical repots, which may be generated using their respective table sets already uploaded into the memory 160. Afterwards the generated list is presented to the user in the process block 507. It may be presented to the user via the output device 157. A decision process block causes execution of a process block 509, if the user has selected one or more analytical reports of the first list presented to him in the process block 507. The decision process block causes execution of a sequence of the above-described process blocks 511, 504, and 505, if the user has not selected the one or more analytical reports of the first list presented to him in the process block 507. In the process block 509 the one or more selected analytical reports from the list are generated using one or more respective table sets in the memory 160, which are needed for the generation of the one or more selected analytical reports. Afterwards the one or more generated reports are presented to the user in a process block 510. It may be performed via the output device 157.

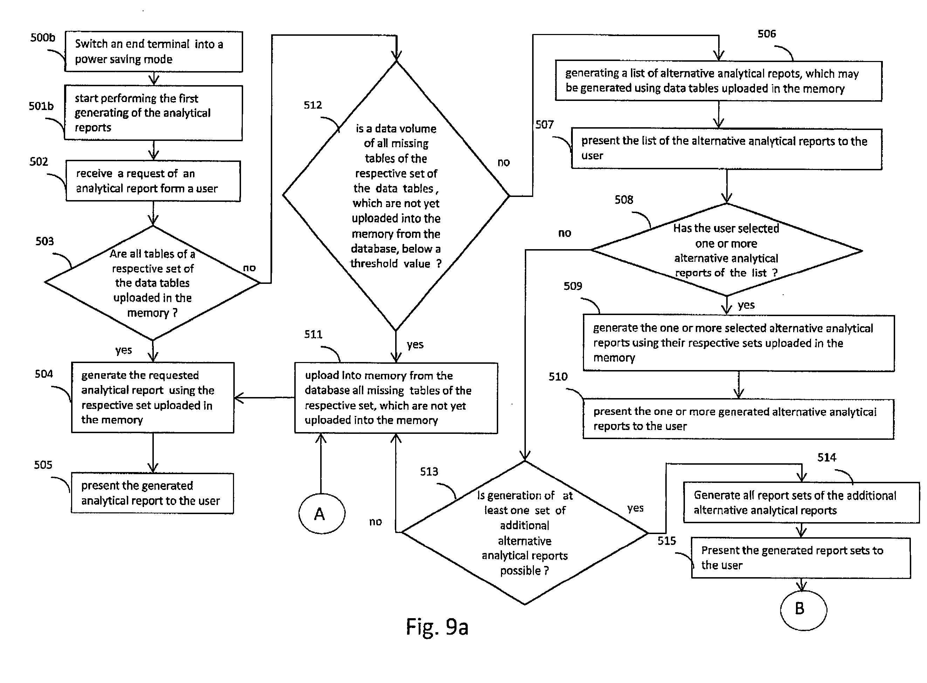

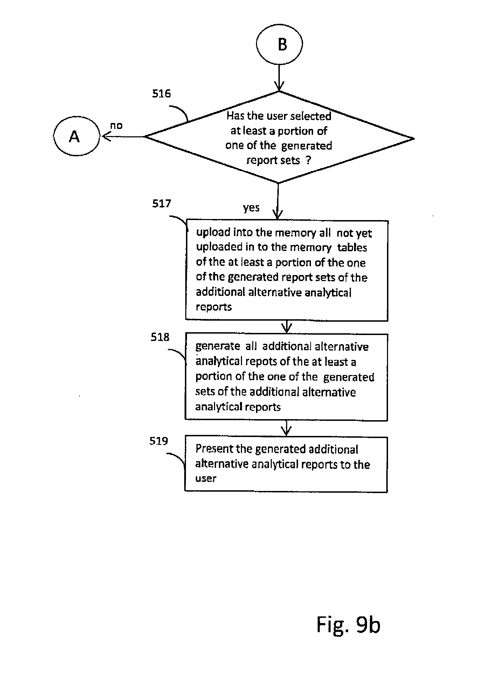

Figs. 9a and 9b illustrate an extension of the aforementioned process of the generating of the analytical reports on the end terminal 170 in the electrical power saving mode. This extension has an additional functionality, wherein depending on the user choice one or more tables having an overall data volume below a threshold data volume may be uploaded into the memory 160 of the end terminal 170. The threshold value may be selected on basis of free and/or available resources of the end terminal 170. For instance, it may be determined by a memory volume in the memory 160 which is free and/or may be freed for uploading of one or more tables from the database 163 which are needed for the generating of the analytical report(s) requested by the user. As another example a battery charge level of the end terminal may be a limiting factor determining the threshold data volume, especially in a case when the end terminal is communicatively coupled to the database via any type of the wireless terminal 162, because the communication request-response rounds cause high level of electrical power consumption. A constraint regarding volume of data traffic between the end terminal 170 and the database 163 may be used as another factor determining the threshold data volume. The process blocks 500b, 501b, 502, 503, 504, and 505 are the same as described above with a single exception: the decision process block 503 cases execution of a decision process block 512 if not all data tables needed for the generation of the analytical report requested by user are already uploaded in the memory 160. The decision process block 512 causes execution of a sequence of the above described process blocks 511, 504, and 505 if an overall data volume of all data tables that have to be uploaded into the memory 160 from the database 163 for the generation of the analytical report requested by the user is below the threshold data volume, otherwise the decision process block 512 causes execution of another sequence of the above described process blocks 506, 507, 508, 509, and 510 with a single exception: the decision process block 508 causes execution of a decision process block 513 if the user has not selected any of the alternative analytical repots presented to him in the process block 507. In the decision process block 513 it is verified whether generation of at least one report set of additional alternative analytical reports is possible, wherein generation of the at least one report set requires uploading into the memory 160 from the database 163 of one or more data tables having overall data volume below the threshold data volume. If Yes, the decision process block 513 causes execution of a process block 514. If No, the decision process block 513 causes execution of the sequence of the above described process blocks 511, 504, and 505. In the process block 514 all report sets of additional alternative analytical reports is generated, wherein generation of each of the alternative additional analytical reports requires uploading into the memory 160 form the database 163 of one or more respective data tables having overall data volume below the threshold data volume. Afterwards in a process block 515 the all generated report sets are presented to the user. This may be performed via the output device 157. A decision process block 516 causes execution of the sequence of above described process blocks 511, 504, and 505, if the user has not selected at least a portion of one of the report sets presented to him in the process block 515, otherwise the decision process block 516 causes execution of a process block 517. In the process block 517 all not yet uploaded in the memory 160 tables which are needed for generation of the at least the portion of the one of the report sets, which are selected by the user, are uploaded into the memory 160 from the database 163. A process block 518 is executed after execution of the process block 517. In the process block 518 all additional alternative analytical reports of the at least the portion of the report set, which are selected by the user, are generated by using all respective data tables in the memory 160. In the process block 519 all generated additional alternative analytical reports of the at least the portion of the report set, which are selected by the user, are presented to the user. This may be performed via the output device 157.

Executing of the process blocks depicted on the Figs. 9a and 9b may be arranged in a different way. First an analytical report requested by the user is generated if the respective table set is in the memory. If not, the list of the alternative analytical reports is presented to the user, wherein all alternative analytical reports may be generated using their respective table sets in the memory. If the user does not select any of the alternative analytical reports, then all not yet uploaded in the memory data tables needed for the generation of the requested analytical report are uploaded in the memory from the database and the requested analytical report is generated using the respective table set in the memory on condition that the overall data volume of the to be uploaded data tables is below the data threshold volume. If the condition is not fulfilled then a sequence of the process blocks 513- 519 is performed as described above. This scheme may be implemented by allocating the decision process block 512 in a different place on the process diagram depicted on the Figs. 9a and 9b, i.e. "No" branch of the decision process block 503 causes execution of the process block 506; "No" branch of the decision process block 508 causes execution of the decision process block 512; "YES" branch of the decision process block 512 causes execution of the process block 511; and "NO" branch of the decision process block 512 causes execution of the decision process block 513.

## Claims

1. A computer-implemented method of generating analytical reports on an end terminal (170), the end terminal comprising a processing unit (156) and a memory (160), the database (163) comprising data tables, wherein generating of each analytical report comprises digital processing of a respective table set of one or more of the data tables, wherein the end terminal is configured to generate the analytical reports in an electrical power saving mode and in a standard electrical power consumption mode, wherein an electrical power consumption of the end terminal in the electrical power saving mode is lower than an electrical power consumption of the end terminal in the standard electrical power consumption mode, wherein a first generating of the analytical reports is performed in the electrical power saving mode and a second generating of the analytical reports is performed in the standard electrical power consumption mode, wherein the processing unit comprises a microprocessor, the microprocessor operates in a microprocessor power saving mode when the end terminal is switched into the electrical power saving mode, wherein the microprocessor operates in a microprocessor standard power consumption mode when the end terminal is switched into the standard electrical power consumption mode, wherein the microprocessor operates at a first clock frequency when the microprocessor operates in the processor power saving mode, wherein the microprocessor operates at a second clock frequency when the microprocessor operates in the microprocessor standard power consumption mode, wherein the second clock frequency is higher than the first clock frequency, the computer-implemented method comprising:
• switching the end terminal into the standard electrical power consumption mode (500a);
• causing the processing unit to perform the second generating of the analytical reports (501 a), wherein the causing of the processing unit to perform the second generating of the analytical reports comprises:
o receiving from a user operating the end terminal a request of an analytical report (502);
o in a case when at least one data table of a respective table set needed for generation of the analytical report is not yet uploaded into the memory (503) uploading into the memory from the database all missing data tables of the respective table set, which are not yet uploaded into the memory (511); and
o generating the analytical report using the respective table set in the memory (504);
• switching the end terminal into the electrical power saving mode (500b);
• causing the processing unit to perform the first generating of the analytical reports (501 b), wherein the causing of the processing unit to perform the first generating of the analytical reports comprises:
o receiving from the user another request of another analytical report (502);
o in a case when another respective table set needed for generating of the analytical report is uploaded into the memory (503) generating the another analytical report using the another respective table set in the memory (504);
o in a case when at least one data table of the another respective table set is not yet uploaded into the memory (503) generating a list of alternative analytical repots, which may be generated using their respective table sets already uploaded in the memory (506);
o in a case when the user has selected one or more analytical reports from the list as alternative to the another requested analytical report (508) generating the one or more selected analytical reports from the first list using one or more respective table sets in the memory needed for the generation of the one or more selected analytical reports (509); and
o in a case when the user has not selected the one or more analytical reports from the first list as alternative to the another requested analytical report (508) uploading into the memory from the database all missing data tables of the another respective table set, which are not yet uploaded into the memory from the database (511), and generating the another requested analytical report using the another respective table set in the memory (504).

2. The computer-implemented of claim 1 further comprising:
o before the generating of the list (506) executing the uploading into the memory from the database of the all missing data tables of the another respective table set (511) in a case when an overall data volume of the all missing tables of the another respective table set is below a threshold data volume (512);
wherein in the case when the user has not selected the one or more analytical reports from the list as alternative to the another requested analytical report (508) and before the uploading into the memory from the database of the all missing data tables of the another respective table set (511) the following is performed:
• generating all report sets of additional alternative analytical reports (514) in a case when the generating of each of the report sets of the additional alternative analytical reports requires uploading into the memory from the database of one or more respective data tables having an overall data volume below the threshold data volume (513);
• in the case when the user has selected at least a portion of the analytical reports of one of the report sets (516) uploading into memory from the database all not yet uploaded data tables needed for generating of the at least the portion of the analytical reports of the one of the report sets (517) and generating the at least the portion of the analytical reports of the one of the report sets using all respective data tables in the memory (518);
wherein the uploading into the memory from the database of the all missing tables of the another respective table set (511) is performed in a case when the user has not selected the at least the portion of the analytical reports of the one of the report sets (516).

3. The computer-implemented method of any one of the preceding claims, wherein the memory is a main memory of the end terminal, the main memory comprises an in-memory database, and the uploaded in the main memory data tables are stored the in-memory database.

4. The computer-implemented method of any one of the preceding claims,
wherein a remote terminal (171) comprises the database, wherein the remote terminal is communicatively coupled to the end terminal via a cellular digital telecommunication network (169), wherein the uploading into the memory from the database of any of the data tables is performed via the digital cellular telecommunication network, wherein the end terminal further comprises a wireless terminal (162) being configured to communicatively couple the end terminal to the remote terminal via the cellular digital telecommunication network, wherein the wireless terminal is in an idle mode by default and in a data transmission mode when the uploading into the memory from the database of any of the data tables is executed via the digital cellular telecommunication network, wherein an electrical power consumption of the wireless terminal in the idle mode is lower than an electrical power consumption of the wireless terminal in the data transmission mode, wherein the electrical power consumption of the end terminal in the electrical power saving mode and in the standard electrical power consumption mode comprises the electrical power consumption of the wireless terminal in the idle mode when the wireless terminal is in the idle mode and the electrical power consumption of the end terminal in the electrical power saving mode and in the standard electrical power consumption mode comprises the electrical power consumption of the wireless terminal in the data transmission mode when the wireless terminal is in the data transmission mode.

5. The computer-implemented method of claim 4, wherein the uploading into the memory from the database of any of the data tables is executed in a framework of a respective communication request-response round between the database and the end terminal via the cellular digital telecommunication network, wherein a time average of a number of the communication request-response rounds generated when the end terminal is in the electrical power saving mode is less or equal to a time average number of the communication request-response rounds generated when the end terminal is in the standard electrical power consumption mode.

6. An end terminal (170) comprising a processing unit (156) and a memory (160), the end terminal being configured to generate analytical reports using data tables of a database (163) in an electrical power saving mode and in a standard electrical power consumption mode, wherein generating of each analytical report comprises digital processing of a respective table set of one or more of the data tables, wherein an electrical power consumption of the end terminal in the electrical power saving mode is lower than an electrical power consumption of the end terminal in the standard electrical power consumption mode, wherein a first generating of the analytical reports is performed in the electrical power saving mode and a second generating of the analytical reports is performed in the standard electrical power consumption mode, wherein the processing unit comprises a microprocessor, the microprocessor operates in a microprocessor power saving mode when the end terminal is switched into the electrical power saving mode, wherein the microprocessor operates in a microprocessor standard power consumption mode when the end terminal is switched into the standard electrical power consumption mode, wherein the microprocessor operates at a first clock frequency when the microprocessor operates in the processor power saving mode, wherein the microprocessor operates at a second clock frequency when the microprocessor operates in the microprocessor standard power consumption mode, wherein the second clock frequency is higher than the first clock frequency, the processing unit is configured to perform the following:
• switching the end terminal into the standard electrical power consumption mode (500a);
• causing the end terminal to perform the second generating of the analytical reports (501 a), wherein the causing of the end terminal to perform the second generating of the analytical reports comprises:
o receiving from a user operating the end terminal a request of an analytical report (502);
o in a case when at least one data table of a respective table set needed for generation of the analytical report is not yet uploaded into the memory (503) uploading into the memory from the database all missing data tables of the respective table set, which are not yet uploaded into the memory (511); and
o generating the analytical report using the respective table set in the memory (504);
• switching the end terminal into the electrical power saving mode (500b);
• causing the end terminal to perform the first generating of the analytical reports (501 b), wherein the causing of the end terminal to perform the first generating of the analytical reports comprises:
o receiving from the user another request of another analytical report (502);
o in a case when another respective table set needed for generating of the analytical report is uploaded in the memory (503) generating the another analytical report using the another respective table set in the memory (504);
o in a case when at least one data table of the another respective table set is not yet uploaded into the memory (503) generating a list of alternative analytical repots, which may be generated using their respective table set uploaded in the memory (506);
o in a case when the user has selected one or more analytical reports from the list as alternative to the another requested analytical report (508) generating the one or more selected analytical reports from the first list using one or more respective table set in the memory needed for the generation of the one or more selected analytical reports (509); and
o in a case when the user has not selected the one or more analytical reports from the first list as alternative to the another requested analytical report (508) uploading into the memory from the database all missing data tables of the another respective table set, which are not yet uploaded into the memory from the database (511), and generating the another requested analytical report using the another respective table set in the memory (504).

7. The end terminal of claim 6, wherein the processing unit is further configured to perform the following:
o before the generating of the list (506) executing the uploading into the memory from the database of the all missing data tables of the another respective table set (511) in a case when an overall data volume of the all missing tables of the another respective table set is below a threshold data volume (512);
wherein in the case when the user has not selected the one or more analytical reports from the list as alternative to the another requested analytical report (508) and before the uploading into the memory from the database of the all missing data tables of the another respective table set (511) the following is performed:
• generating all report sets of additional alternative analytical reports (514) in a case when the generating of each of the report sets of the additional alternative analytical reports requires uploading into the memory from the database of one or more respective data tables having an overall data volume below the threshold data volume (513);
• in the case when the user has selected at least a portion of the analytical reports of one of the report sets (516) uploading into memory from the database all not yet uploaded data tables needed for generating of the at least the portion of the analytical reports of the one of the report sets (517) and generating the at least the portion of the analytical reports of the one of the report sets using all respective data tables in the memory (518);
wherein the uploading into the memory from the database of the all missing tables of the another respective table set (511) is performed in a case when the user has not selected the at least the portion of the analytical reports of the one of the report sets (516).

8. The end terminal of claim 7 or 6, wherein the memory is a main memory of the end terminal, the main memory comprises an in-memory database, and the uploaded in the main memory data tables are stored the in-memory database.

9. The end terminal of one of claims 6-8, wherein a remote terminal (171) comprises the database, wherein the remote terminal is communicatively coupled to an end terminal (171) comprising the database (163) via a cellular digital telecommunication network (169), wherein the uploading into the memory from the database of any of the data tables is performed via the digital cellular telecommunication network, wherein the end terminal further comprises a wireless terminal (162) being configured to communicatively couple the end terminal to the remote terminal via the cellular digital telecommunication network, wherein the wireless terminal is in an idle mode by default and in an data transmission mode when the uploading into the memory from the database of any of the data tables is executed via the digital cellular telecommunication network, wherein an electrical power consumption of the wireless terminal in the idle mode is lower than an electrical power consumption of the wireless terminal in the data transmission mode, wherein the electrical power consumption of the end terminal in the electrical power saving mode and in the standard electrical power consumption mode comprises the electrical power consumption of the wireless terminal in the idle mode when the wireless terminal is in the idle mode and the electrical power consumption of the end terminal in the electrical power saving mode and in the standard electrical power consumption mode comprises the electrical power consumption of the wireless terminal in the data transmission mode when the wireless terminal is in the data transmission mode.

10. The end terminal of claim 9, wherein the uploading into the memory from the database of any of the data tables is executed in a framework of a respective communication request-response round between the database and the end terminal via the cellular digital telecommunication network, wherein a time average of a number of the communication request-response rounds generated when the end terminal is in the electrical power saving mode is less or equal to a time average number of the communication request-response rounds generated when the end terminal is in the standard electrical power consumption mode.

11. A computer readable medium having stored thereon a computer executable code for execution by a processing unit controlling an end terminal, wherein execution of the instructions of the executable code causes the processing unit to execute a computer-implemented method of claims 1-5 on the end terminal.

## Patentansprüche

1. Computerimplementiertes Verfahren zum Erstellen von Analyseberichten an einem Endgerät (170), wobei das Endgerät eine Verarbeitungseinheit (156) und einen Speicher (160) umfasst, die Datenbank (163) Datentabellen umfasst, das Erstellen jedes Analyseberichts ein digitales Verarbeiten eines jeweiligen Tabellensatzes aus einer oder mehreren der Datentabellen umfasst, das Endgerät so ausgelegt ist, dass es die Analyseberichte in einem Stromsparmodus und in einem Standardstromverbrauchsmodus erstellt, ein Stromverbrauch des Endgeräts im Stromsparmodus niedriger ist als ein Stromverbrauch des Endgeräts im Standardstromverbrauchsmodus, ein erstes Erstellen der Analyseberichte im Stromsparmodus durchgeführt wird und ein zweites Erstellen der Analyseberichte im Standardstromverbrauchsmodus durchgeführt wird, die Verarbeitungseinheit einen Mikroprozessor umfasst, der Mikroprozessor in einem Stromsparmodus des Mikroprozessors arbeitet, wenn das Endgerät in den Stromsparmodus umgeschaltet wird, der Mikroprozessor in einem Standardstromverbrauchsmodus des Mikroprozessors arbeitet, wenn das Endgerät in den Standardstromverbrauchsmodus umgeschaltet wird, der Mikroprozessor mit einer ersten Taktfrequenz arbeitet, wenn der Mikroprozessor im Stromsparmodus des Prozessors arbeitet, der Mikroprozessor mit einer zweiten Taktfrequenz arbeitet, wenn der Mikroprozessor im Standardstromverbrauchsmodus des Mikroprozessors arbeitet, die zweite Taktfrequenz höher ist als die erste Taktfrequenz, das computerimplementierte Verfahren Folgendes umfasst:
• Umschalten des Endgeräts in den Standardstromverbrauchsmodus (500a);
• Bewirken, dass die Verarbeitungseinheit das zweite Erstellen der Analyseberichte durchführt (501 a), wobei das Bewirken, dass die Verarbeitungseinheit das zweite Erstellen der Analyseberichte durchführt, Folgendes umfasst:
o Empfangen einer Anforderung eines Analyseberichts von einem Nutzer, der das Endgerät bedient (502);
o wenn mindestens eine Datentabelle eines jeweiligen Tabellensatzes, der zum Erstellen des Analyseberichts benötigt wird, noch nicht in den Speicher hochgeladen worden ist (503), Hochladen aller fehlenden Datentabellen des jeweiligen Tabellensatzes, die noch nicht in den Speicher hochgeladen wurden, aus der Datenbank in den Speicher (511); und
o Erstellen des Analyseberichts unter Verwendung des jeweiligen Tabellensatzes im Speicher (504);
• Umschalten des Endgeräts in den Stromsparmodus (500b);
• Bewirken, dass die Verarbeitungseinheit das erste Erstellen der Analyseberichte durchführt (501 a), wobei das Bewirken, dass die Verarbeitungseinheit das erste Erstellen der Analyseberichte durchführt, Folgendes umfasst:
o Empfangen einer weiteren Anforderung eines weiteren Analyseberichts von dem Nutzer (502);
o wenn ein weiterer jeweiliger Tabellensatz, der zum Erstellen des Analyseberichts benötigt wird, in den Speicher hochgeladen wird (503), Erstellen des weiteren Analyseberichts unter Verwendung des weiteren jeweiligen Tabellensatzes im Speicher (504);
o wenn mindestens eine Datentabelle des weiteren jeweiligen Tabellensatzes noch nicht in den Speicher hochgeladen worden ist (503), Erstellen einer Liste alternativer Analyseberichte, die unter Verwendung ihrer jeweiligen Tabellensätze erstellt werden kann, die bereits in den Speicher hochgeladen wurden (506);
o wenn der Nutzer einen oder mehrere Analyseberichte aus der Liste als Alternative zu dem weiteren angeforderten Analysebericht ausgewählt hat (508), Erstellen des einen oder der mehreren ausgewählten Analyseberichte aus der ersten Liste unter Verwendung einer oder mehrerer jeweiliger Tabellensätze im Speicher, der bzw. die für die Erstellung des einen oder der mehreren ausgewählten Analyseberichte benötigt wird bzw. werden (509); und
o wenn der Nutzer den einen oder die mehreren Analyseberichte aus der ersten Liste nicht als Alternative zu dem weiteren angeforderten Analysebericht ausgewählt hat (508), Hochladen aller fehlenden Datentabellen des weiteren jeweiligen Tabellensatzes, die noch nicht aus der Datenbank in den Speicher hochgeladen wurden, aus der Datenbank in den Speicher (511), und Erstellen des weiteren angeforderten Analyseberichts unter Verwendung des weiteren jeweiligen Tabellensatzes im Speicher (504).

2. Computerimplementiertes Verfahren nach Anspruch 1, ferner umfassend:
o vor dem Erstellen der Liste (506) Ausführen des Hochladens aller fehlenden Datentabellen des weiteren jeweiligen Tabellensatzes aus der Datenbank in den Speicher (511), wenn ein Gesamtdatenvolumen aller fehlenden Tabellen des weiteren jeweiligen Tabellensatzes unter einem Schwellendatenvolumen liegt (512);
wobei, wenn der Nutzer den einen oder die mehreren Analyseberichte aus der Liste nicht als Alternative zu dem weiteren angeforderten Analysebericht ausgewählt hat (508), und vor dem Hochladen aller fehlenden Datentabellen des weiteren jeweiligen Tabellensatzes aus der Datenbank in den Speicher (511) Folgendes ausgeführt wird:
• Erstellen aller Berichtsätze zusätzlicher alternativer Analyseberichte (514), wenn das Erstellen von jedem der Berichtsätze der zusätzlichen alternativen Analyseberichte ein Hochladen von einer oder mehreren jeweiligen Datentabellen mit einem Gesamtdatenvolumen unter dem Schwellendatenvolumen aus der Datenbank in den Speicher erfordert (513);
• wenn der Nutzer zumindest einen Teil der Analyseberichte von einem der Berichtsätze ausgewählt hat (516), Hochladen aller noch nicht hochgeladenen Datentabellen, die zum Erstellen zumindest des Teils der Analyseberichte von dem einen der Berichtsätze benötigt werden, aus der Datenbank in den Speicher (517) und Erstellen zumindest des Teils der Analyseberichte von dem einen der Berichtsätze unter Verwendung aller jeweiligen Datentabellen im Speicher (518);
wobei das Hochladen aller fehlenden Tabellen des weiteren jeweiligen Tabellensatzes aus der Datenbank in den Speicher (511) erfolgt, wenn der Nutzer zumindest den Teil der Analyseberichte von dem einen der Berichtsätze nicht ausgewählt hat (516).

3. Computerimplementiertes Verfahren nach einem der vorhergehenden Ansprüche, wobei der Speicher ein Hauptspeicher des Endgeräts ist, der Hauptspeicher eine Speicherdatenbank umfasst, und die in den Hauptspeicher hochgeladenen Datentabellen in der Speicherdatenbank gespeichert werden.

4. Computerimplementiertes Verfahren nach einem der vorgehenden Ansprüche, wobei ein fernes Endgerät (171) die Datenbank umfasst, das entfernte Endgerät zur Datenübertragung mit dem Endgerät über ein zellulares digitales Telekommunikationsnetz (169) gekoppelt ist, das Hochladen einer beliebigen der Datentabellen aus der Datenbank in den Speicher über das zellulare digitale Telekommunikationsnetz erfolgt, das Endgerät ferner ein drahtloses Endgerät (162) umfasst, das so ausgelegt ist, dass es das Endgerät zur Datenübertragung mit dem entfernten Endgerät über das zellulare digitale Telekommunikationsnetz koppelt, sich das drahtlose Endgerät standardmäßig in einem Leerlaufmodus befindet und in einem Datenübertragungsmodus, wenn das Hochladen einer beliebigen der Datentabellen aus der Datenbank in den Speicher über das zellulare digitale Telekommunikationsnetz erfolgt, ein Stromverbrauch des drahtlosen Endgeräts im Leerlaufmodus niedriger ist als ein Stromverbrauch des drahtlosen Endgeräts im Datenübertragungsmodus, der Stromverbrauch des Endgeräts im Stromsparmodus und im Standardstromverbrauchsmodus den Stromverbrauch des drahtlosen Endgeräts im Leerlaufmodus umfasst, wenn sich das drahtlose Endgerät im Leerlaufmodus befindet, und der Stromverbrauch des Endgeräts im Stromsparmodus und im Standardstromverbrauchsmodus den Stromverbrauch des drahtlosen Endgeräts im Datenübertragungsmodus umfasst, wenn sich das drahtlose Endgerät im Datenübertragungsmodus befindet.

5. Computerimplementiertes Verfahren nach Anspruch 4, wobei das Hochladen von einer beliebigen der Datentabellen aus der Datenbank in den Speicher im Rahmen einer jeweiligen Anforderung-Antwort-Abfolge zur Datenübertragung zwischen der Datenbank und dem Endgerät über das zellulare digitale Telekommunikationsnetz ausgeführt wird, wobei ein zeitlicher Mittelwert einer Anzahl der Anforderung-Antwort-Abfolgen zur Datenübertragung, die erzeugt werden, wenn sich das Endgerät im Stromsparmodus befindet, kleiner gleich einer zeitgemittelten Anzahl der Anforderung-Antwort-Abfolgen zur Datenübertragung ist, die erzeugt werden, wenn sich das Endgerät im Standardstromverbrauchsmodus befindet.

6. Endgerät (170), umfassend eine Verarbeitungseinheit (156) und einen Speicher (160), wobei das Endgerät so ausgelegt ist, dass es Analyseberichte unter Verwendung von Datentabellen einer Datenbank (163) in einem Stromsparmodus und in einem Standardstromverbrauchsmodus erstellt, das Erstellen jedes Analyseberichts ein digitales Verarbeiten eines jeweiligen Tabellensatzes aus einer oder mehreren der Datentabellen umfasst, ein Stromverbrauch des Endgeräts im Stromsparmodus niedriger ist als ein Stromverbrauch des Endgeräts im Standardstromverbrauchsmodus, ein erstes Erstellen der Analyseberichte im Stromsparmodus durchgeführt wird und ein zweites Erstellen der Analyseberichte im Standardstromverbrauchsmodus durchgeführt wird, die Verarbeitungseinheit einen Mikroprozessor umfasst, der Mikroprozessor in einem Stromsparmodus des Mikroprozessors arbeitet, wenn das Endgerät in den Stromsparmodus umgeschaltet wird, der Mikroprozessor in einem Standardstromverbrauchsmodus des Mikroprozessors arbeitet, wenn das Endgerät in den Standardstromverbrauchsmodus umgeschaltet wird, der Mikroprozessor mit einer ersten Taktfrequenz arbeitet, wenn der Mikroprozessor im Stromsparmodus des Prozessors arbeitet, der Mikroprozessor mit einer zweiten Taktfrequenz arbeitet, wenn der Mikroprozessor im Standardstromverbrauchsmodus des Mikroprozessors arbeitet, die zweite Taktfrequenz höher ist als die erste Taktfrequenz, die Verarbeitungseinheit so ausgelegt ist, dass sie Folgendes ausführt:
• Umschalten des Endgeräts in den Standardstromverbrauchsmodus (500a);
• Bewirken, dass das Endgerät das zweite Erstellen der Analyseberichte durchführt (501 a), wobei das Bewirken, dass das Endgerät das zweite Erstellen der Analyseberichte durchführt, Folgendes umfasst:
o Empfangen einer Anforderung eines Analyseberichts von einem Nutzer, der das Endgerät bedient (502);
o wenn mindestens eine Datentabelle eines jeweiligen Tabellensatzes, der zum Erstellen des Analyseberichts benötigt wird, noch nicht in den Speicher hochgeladen worden ist (503), Hochladen aller fehlenden Datentabellen des jeweiligen Tabellensatzes, die noch nicht in den Speicher hochgeladen wurden, aus der Datenbank in den Speicher (511); und
o Erstellen des Analyseberichts unter Verwendung des jeweiligen Tabellensatzes im Speicher (504);
• Umschalten des Endgeräts in den Stromsparmodus (500b);
• Bewirken, dass das Endgerät das erste Erstellen der Analyseberichte durchführt (501 b), wobei das Bewirken, dass das Endgerät das erste Erstellen der Analyseberichte durchführt, Folgendes umfasst:
o Empfangen einer weiteren Anforderung eines weiteren Analyseberichts von dem Nutzer (502);
o wenn ein weiterer jeweiliger Tabellensatz, der zum Erstellen des Analyseberichts benötigt wird, in den Speicher hochgeladen wird (503), Erstellen des weiteren Analyseberichts unter Verwendung des weiteren jeweiligen Tabellensatzes im Speicher (504);
o wenn mindestens eine Datentabelle des weiteren jeweiligen Tabellensatzes noch nicht in den Speicher hochgeladen worden ist (503), Erstellen einer Liste alternativer Analyseberichte, die unter Verwendung ihres jeweiligen Tabellensatzes erstellt werden können, der bereits in den Speicher hochgeladen wurde (506);
o wenn der Nutzer einen oder mehrere Analyseberichte aus der Liste als Alternative zu dem weiteren angeforderte Analysebericht ausgewählt hat (508), Erstellen des einen oder der mehreren ausgewählten Analyseberichte aus der ersten Liste unter Verwendung einer oder mehrerer jeweiliger Tabellensätze im Speicher, der bzw. die für die Erstellung des einen oder der mehreren ausgewählten Analyseberichte benötigt wird bzw. werden (509); und
o wenn der Nutzer den einen oder die mehreren Analyseberichte aus der ersten Liste nicht als Alternative zu dem weiteren angeforderten Analysebericht ausgewählt hat (508), Hochladen aller fehlenden Datentabellen des weiteren jeweiligen Tabellensatzes, die noch nicht aus der Datenbank in den Speicher hochgeladen wurden, aus der Datenbank in den Speicher (511), und Erstellen des weiteren angeforderten Analyseberichts unter Verwendung des weiteren jeweiligen Tabellensatzes im Speicher (504).

7. Endgerät nach Anspruch 6, wobei die Verarbeitungseinheit ferner so ausgelegt ist, dass sie Folgendes ausführt:
o vor dem Erstellen der Liste (506) Ausführen des Hochladens aller fehlenden Datentabellen des weiteren jeweiligen Tabellensatzes aus der Datenbank in den Speicher (511), wenn ein Gesamtdatenvolumen aller fehlenden Tabellen des weiteren jeweiligen Tabellensatzes unter einem Schwellendatenvolumen liegt (512);
wobei, wenn der Nutzer den einen oder die mehreren Analyseberichte aus der Liste nicht als Alternative zu dem weiteren angeforderten Analysebericht ausgewählt hat (508), und vor dem Hochladen aller fehlenden Datentabellen des weiteren jeweiligen Tabellensatzes aus der Datenbank in den Speicher (511) Folgendes ausgeführt wird:
• Erstellen aller Berichtsätze zusätzlicher alternativer Analyseberichte (514), wenn das Erstellen von jedem der Berichtsätze der zusätzlichen alternativen Analyseberichte ein Hochladen von einer oder mehreren jeweiligen Datentabellen mit einem Gesamtdatenvolumen unter dem Schwellendatenvolumen aus der Datenbank in den Speicher erfordert (513);
• wenn der Nutzer zumindest einen Teil der Analyseberichte von einem der Berichtsätze ausgewählt hat (516), Hochladen aller noch nicht hochgeladenen Datentabellen, die zum Erstellen zumindest des Teils der Analyseberichte von dem einen der Berichtsätze benötigt werden, aus der Datenbank in den Speicher (517) und Erstellen zumindest des Teils der Analyseberichte von dem einen der Berichtsätze unter Verwendung aller jeweiligen Datentabellen im Speicher (518);
wobei das Hochladen aller fehlenden Tabellen des weiteren jeweiligen Tabellensatzes aus der Datenbank in den Speicher (511) erfolgt, wenn der Nutzer zumindest den Teil der Analyseberichte von dem einen der Berichtsätze nicht ausgewählt hat (516).

8. Endgerät nach Anspruch 7 oder 6, wobei der Speicher ein Hauptspeicher des Endgeräts ist, der Hauptspeicher eine Speicherdatenbank umfasst und die in den Hauptspeicher hochgeladenen Datentabellen in der Speicherdatenbank gespeichert sind.

9. Endgerät nach einem der Ansprüche 6 bis 8, wobei ein fernes Endgerät (171) die Datenbank umfasst, das entfernte Endgerät zur Datenübertragung mit einem Endgerät (171), das die Datenbank (163) umfasst, über ein zellulares digitales Telekommunikationsnetz (169) gekoppelt ist, das Hochladen einer beliebigen der Datentabellen aus der Datenbank in den Speicher über das zellulare digitale Telekommunikationsnetz erfolgt, das Endgerät ferner ein drahtloses Endgerät (162) umfasst, das so ausgelegt ist, dass es das Endgerät zur Datenübertragung mit dem entfernten Endgerät über das zellulare digitale Telekommunikationsnetz koppelt, sich das drahtlose Endgerät standardmäßig in einem Leerlaufmodus befindet und in einem Datenübertragungsmodus, wenn das Hochladen einer beliebigen der Datentabellen aus der Datenbank in den Speicher über das zellulare digitale Telekommunikationsnetz erfolgt, ein Stromverbrauch des drahtlosen Endgeräts im Leerlaufmodus niedriger ist als ein Stromverbrauch des drahtlosen Endgeräts im Datenübertragungsmodus, der Stromverbrauch des Endgeräts im Stromsparmodus und im Standardstromverbrauchsmodus den Stromverbrauch des drahtlosen Endgeräts im Leerlaufmodus umfasst, wenn sich das drahtlose Endgerät im Leerlaufmodus befindet, und der Stromverbrauch des Endgeräts im Stromsparmodus und im Standardstromverbrauchsmodus den Stromverbrauch des drahtlosen Endgeräts im Datenübertragungsmodus umfasst, wenn sich das drahtlose Endgerät im Datenübertragungsmodus befindet.

10. Endgerät nach Anspruch 9, wobei das Hochladen von einer beliebigen der Datentabellen aus der Datenbank in den Speicher im Rahmen einer jeweiligen Anforderung-Antwort-Abfolge zur Datenübertragung zwischen der Datenbank und dem Endgerät über das zellulare digitale Telekommunikationsnetz ausgeführt wird, wobei ein zeitlicher Mittelwert einer Anzahl der Anforderung-Antwort-Abfolgen zur Datenübertragung, die erzeugt werden, wenn sich das Endgerät im Stromsparmodus befindet, kleiner gleich einer zeitgemittelten Anzahl der Anforderung-Antwort-Abfolgen zur Datenübertragung ist, die erzeugt werden, wenn sich das Endgerät im Standardstromverbrauchsmodus befindet.

11. Computerlesbares Medium, auf dem ein von einem Computer ausführbarer Code zum Ausführen durch eine Verarbeitungseinheit gespeichert ist, die ein Endgerät steuert, wobei das Ausführen der Anweisungen des ausführbaren Codes bewirkt, dass die Verarbeitungseinheit ein computerimplementiertes Verfahren nach Anspruch 1 bis 5 auf dem Endgerät ausführt.

## Revendications

1. Procédé mis en oeuvre par ordinateur de génération de rapports d'analyse sur un terminal d'extrémité (170), le terminal d'extrémité comprenant une unité de traitement (156) et une mémoire (160), la base de données (163) comprenant des tables de données, où la création de chaque rapport d'analyse comprend le traitement numérique d'un ensemble de la table respective d'une ou de plusieurs tables de données, où le terminal d'extrémité est configuré pour générer les rapports analytiques dans un mode économie de l'énergie électrique et dans un mode standard de consommation de l'énergie électrique, où la consommation de l'énergie électrique du terminal d'extrémité dans un mode d'économie de l'énergie électrique est plus faible que la consommation de l'énergie électrique du terminal d'extrémité dans un mode standard de consommation de l'énergie électrique, où une première création des rapports d'analyse est réalisée dans le mode économie de l'énergie électrique et la seconde création des rapports d'analyse est réalisée dans le mode standard de consommation de l'énergie électrique, où l'unité de traitement comprend un microprocesseur, le microprocesseur fonctionnant dans un mode économie de l'énergie lorsque le terminal d'extrémité est commuté dans le mode économie de l'énergie électrique, où le microprocesseur fonctionne dans un mode standard de consommation de l'énergie du microprocesseur lorsque le terminal d'extrémité est commuté dans le mode standard de consommation de l'énergie électrique, où le microprocesseur fonctionne avec une première fréquence d'horloge lorsque le microprocesseur fonctionne dans le mode économie de l'énergie du processeur, où le microprocesseur fonctionne à une seconde fréquence d'horloge lorsque le microprocesseur fonctionne dans le mode standard de consommation de l'énergie du microprocesseur, où la seconde fréquence d'horloge est plus élevée que la première fréquence d'horloge, le procédé mis en oeuvre par ordinateur comprenant :
• la commutation du terminal d'extrémité dans le mode standard de consommation de l'énergie électrique (500a) ;
• le déclenchement par l'unité de traitement de la réalisation de la seconde génération des rapports d'analyse (501 a), où le déclenchement par l'unité de traitement de la réalisation de la seconde génération des rapports d'analyse comprend :
o la réception, en provenance d'un utilisateur qui exploite le terminal d'extrémité, d'une requête pour un rapport d'analyse (502) ;
o dans le cas où au moins une table de données d'un ensemble de la table respective nécessaire à la création du rapport d'analyse n'est pas encore chargée en mémoire (503), le chargement dans la mémoire à partir de la base de données de toutes les tables de données manquantes de l'ensemble de la table respective, qui ne sont pas encore chargées dans la mémoire (511) ; et
o la génération du rapport d'analyse en utilisant l'ensemble de la table respective en mémoire (504) ;
• la commutation du terminal d'extrémité dans le mode économie de l'énergie électrique (500b) ;
• le déclenchement par l'unité de traitement de la réalisation de la première création des rapports d'analyse (501 b), où le déclenchement par l'unité de traitement de la réalisation de la première création des rapports d'analyse comprend :
o la réception en provenance de l'utilisateur d'une autre requête d'un autre rapport d'analyse (502) ;
o dans le cas où un autre ensemble de la table respective nécessaire à la création du rapport d'analyse est chargé dans la mémoire (503) la création d'un autre rapport d'analyse en utilisant un autre ensemble de la table respective en mémoire (504) ;
o dans le cas où au moins une table de données de l'autre ensemble de la table respective n'est pas encore chargée dans la mémoire (503), la création d'une liste de rapports d'analyse alternatifs, qui peut être générée en utilisant leurs ensembles de la table respective déjà chargés en mémoire (506) ;
o dans le cas où l'utilisateur a choisi un ou plusieurs rapports d'analyse à partir de la liste en tant qu'alternative à l'autre rapport d'analyse demandé (508), la création d'un ou de plusieurs rapports d'analyse choisis à partir de la première liste en utilisant un ou plusieurs ensemble(s) de la table respective en mémoire nécessaire(s) à la création d'un ou de plusieurs rapport(s) d'analyse choisi(s) (509) ; et
o dans le cas où l'utilisateur n'a pas choisi le ou les plusieurs rapports à partir de la première liste en tant qu'alternative à l'autre rapport d'analyse demandé (508), le chargement dans la mémoire à partir de la base de données de toutes les tables de données manquantes de l'autre ensemble de la table respective, qui ne sont pas encore chargées en mémoire à partir de la base de données (511), et la création d'un autre rapport d'analyse demandé en utilisant l'autre ensemble de la table respective en mémoire (504).

2. Procédé mis en oeuvre par ordinateur selon la revendication 1, comprenant en outre :
o avant la création de la liste (506), l'exécution du chargement dans la mémoire à partir de la base de données de toutes les tables de données manquantes de l'autre ensemble de la table respective (511) dans le cas où le volume total des données de toutes les tables manquantes de l'autre ensemble de la table respective est en dessous d'un volume limite de données (512) ;
où, dans le cas ou l'utilisateur n'a pas choisi le ou les plusieurs rapports d'analyse à partir de la liste en tant qu'alternative à l'autre rapport d'analyse demandé (508) et avant le chargement dans la mémoire à partir de la base de données de toutes les tables de données manquantes de l'autre ensemble de la table respective (511), les actions suivantes sont réalisées :
• création de tous les ensembles de rapports des rapports d'analyse alternatifs supplémentaires (514) dans le cas où la création de chacun des ensembles de rapports des rapports d'analyse alternatifs supplémentaires nécessite le chargement dans la mémoire à partir de la base de données d'une ou de plusieurs table(s) de données respective(s) ayant un volume total de données en dessous d'un volume limite de données (513) ;
• dans le cas où l'utilisateur a choisi au moins une partie des rapports d'analyse de l'un des ensembles de rapport (516), le chargement dans la mémoire à partir de la base de données de toutes les tables de données non encore chargées nécessaires pour créer l'au moins une partie des rapports d'analyse de celui des ensembles de rapports (517) et la création d'au moins une partie des rapports d'analyse de celui des ensembles de rapports en utilisant toutes les tables de données respectives en mémoire (518) ;
où le chargement dans la mémoire à partir de la base de données de toutes les tables manquantes de l'autre ensemble de la table respective (511) est réalisé dans le cas où l'utilisateur n'a pas choisi l'au moins une partie des rapports d'analyse de celui des ensembles de rapports (516).

3. Procédé mis en oeuvre par ordinateur selon l'une quelconque des revendications précédentes, dans lequel la mémoire est une mémoire principale du terminal d'extrémité, la mémoire principale comprend une base de données en mémoire, et les tables de données chargées dans la mémoire principale sont stockées dans la base de données en mémoire.

4. Procédé mis en oeuvre par ordinateur selon l'une quelconque des revendications précédentes, dans lequel un terminal distant (171) comprend la base de données, où le terminal distant est couplé de manière communicative au terminal d'extrémité via un réseau numérique de télécommunication cellulaire (169), où le chargement dans la mémoire à partir de la base de données de n'importe quelle table de données est réalisé via le réseau numérique de télécommunication cellulaire, où le terminal d'extrémité comprend en outre un terminal sans fil (162) étant configuré pour coupler de manière communicative le terminal d'extrémité au terminal distant via le réseau numérique de télécommunication cellulaire, où le terminal sans fil est dans un mode veille par défaut et dans un mode de transmission des données lorsque le chargement dans la mémoire à partir de la base de données de n'importe laquelle des tables de données est exécuté via le réseau numérique de télécommunication cellulaire, où une consommation de l'énergie électrique du terminal sans fil dans le mode veille est plus faible qu'une consommation électrique du terminal sans fil dans le mode transmission des données, où la consommation de l'énergie électrique du terminal d'extrémité dans le mode économie de l'énergie électrique et dans le mode standard de consommation de l'énergie électrique comprend la consommation de l'énergie électrique du terminal sans fil dans le mode veille lorsque le terminal sans fil est dans le mode veille et la consommation de l'énergie électrique du terminal d'extrémité dans le mode économie de l'énergie électrique et dans le mode standard de consommation de l'énergie électrique comprend la consommation de l'énergie électrique du terminal sans fil dans le mode transmission des données lorsque le terminal sans fil est dans le mode transmission des données.

5. Procédé mis en oeuvre selon la revendication 4, dans lequel le chargement dans la mémoire à partir de la base de données de l'une quelconque des tables de données est exécuté dans le cadre d'un échange respectif de communication demande - réponse entre la base de données et le terminal d'extrémité via le réseau numérique de télécommunication cellulaire, où la moyenne temporelle d'un nombre d'échanges de communication demande - réponse générée lorsque le terminal d'extrémité est dans le mode économie de l'énergie électrique est inférieure ou égale à la moyenne temporelle du nombre d'échanges demande - réponse générée lorsque le terminal d'extrémité est dans le mode standard de consommation de l'énergie électrique.

6. Terminal d'extrémité (170) comprenant une unité de traitement (156) et une mémoire (160), le terminal d'extrémité étant configuré pour générer des rapports d'analyse en utilisant des tables de données d'une base de données (163) dans un mode économie de l'énergie électrique et dans un mode standard de consommation de l'énergie électrique, où la création de chacun des rapports d'analyse comprend le traitement numérique d'un ensemble de la table respective de l'une ou de plusieurs tables de données, où une consommation de l'énergie électrique du terminal d'extrémité dans le mode économie de l'énergie électrique est plus faible qu'une consommation de l'énergie électrique du terminal d'extrémité dans le mode standard de consommation de l'énergie électrique, où la première création des rapports d'analyse est réalisée dans le mode économie de l'énergie électrique et la seconde création des rapports d'analyse est réalisée dans le mode standard de consommation de l'énergie électrique, où l'unité de traitement comprend un microprocesseur, le microprocesseur fonctionne dans un mode économie de l'énergie du microprocesseur lorsque le terminal d'extrémité est commuté dans le mode économie de l'énergie électrique, où le microprocesseur fonctionne dans un mode standard de consommation de l'énergie du microprocesseur lorsque le terminal d'extrémité est commuté dans le mode standard de consommation de l'énergie électrique, où le microprocesseur fonctionne avec une première fréquence d'horloge lorsque le microprocesseur fonctionne dans le mode économie de l'énergie du microprocesseur, où le microprocesseur fonctionne avec une seconde fréquence d'horloge lorsque le microprocesseur fonctionne dans le mode standard de consommation de l'énergie du processeur, où la seconde fréquence d'horloge est plus élevée que la première fréquence d'horloge, l'unité de traitement est configurée pour réaliser les actions suivantes :
• commutation du terminal d'extrémité dans le mode standard de consommation de l'énergie électrique (500a) ;
• déclenchement par le terminal d'extrémité de la réalisation de la seconde génération des rapports d'analyse (501 a), où le déclenchement par le terminal d'extrémité de la réalisation de la seconde génération des rapports d'analyse comprend :
o la réception, en provenance d'un utilisateur qui exploite le terminal d'extrémité, d'une requête pour un rapport d'analyse (502) ;
o dans le cas où au moins une table de données d'un ensemble de la table respective nécessaire à la création du rapport d'analyse n'est pas encore chargée en mémoire (503), le chargement dans la mémoire à partir de la base de données de toutes les tables de données manquantes de l'ensemble de la table respective, qui ne sont pas encore chargées dans la mémoire (511) ; et
o la génération du rapport d'analyse en utilisant l'ensemble de la table respective en mémoire (504) ;
• commutation du terminal d'extrémité dans le mode économie de l'énergie électrique (500b) ;
• déclenchement par le terminal d'extrémité de la réalisation de la première création des rapports d'analyse (501 b), où le déclenchement par le terminal d'extrémité de la réalisation de la première création des rapports d'analyse comprend :
o la réception en provenance de l'utilisateur d'une autre requête d'un autre rapport d'analyse (502) ;
o dans le cas où un autre ensemble de la table respective nécessaire à la création du rapport d'analyse est chargé dans la mémoire (503), la création d'un autre rapport d'analyse en utilisant un autre ensemble de la table respective en mémoire (504) ;
o dans le cas où au moins une table de données de l'autre ensemble de la table respective n'est pas encore chargée dans la mémoire (503), la création d'une liste de rapports d'analyse alternatifs, qui peut être générée en utilisant leurs ensembles de la table respective chargés en mémoire (506) ;
o dans le cas où l'utilisateur a choisi un ou plusieurs rapports d'analyse à partir de la liste en tant qu'alternative à l'autre rapport d'analyse demandé (508), la création d'un ou de plusieurs rapports d'analyse choisis à partir de la première liste en utilisant un ou plusieurs ensemble(s) de la table respective en mémoire nécessaire(s) à la création d'un ou de plusieurs rapport(s) d'analyse choisi(s) (509) ; et
o dans le cas où l'utilisateur n'a pas choisi le ou les plusieurs rapports à partir de la première liste en tant qu'alternative à l'autre rapport d'analyse demandé (508), le chargement dans la mémoire à partir de la base de données de toutes les tables de données manquantes de l'autre ensemble de la table respective, qui ne sont pas encore chargées en mémoire à partir de la base de données (511), et la création d'un autre rapport d'analyse demandé en utilisant l'autre ensemble de la table respective en mémoire (504).

7. Terminal d'extrémité selon la revendication 6, dans lequel l'unité de traitement est en outre configurée pour réaliser les actions suivantes :
o avant la création de la liste (506), exécution du chargement dans la mémoire à partir de la base de données de toutes les tables de données manquantes de l'autre ensemble de la table respective (511) dans le cas où le volume total des données de toutes les tables manquantes de l'autre ensemble de la table respective est en dessous d'un volume limite de données (512) ;
où dans le cas ou l'utilisateur n'a pas choisi le ou les plusieurs rapports d'analyse à partir de la liste en tant qu'alternative à l'autre rapport d'analyse demandé (508) et avant le chargement dans la mémoire à partir de la base de données de toutes les tables de données manquantes de l'autre ensemble de la table respective (511), les actions suivantes sont réalisées :
• création de tous les ensembles de rapports des rapports d'analyse alternatifs supplémentaires (514) dans le cas où la création de chacun des ensembles de rapports des rapports d'analyse alternatifs supplémentaires nécessite le chargement dans la mémoire à partir de la base de données d'une ou de plusieurs table(s) de données respective(s) ayant un volume total de données en dessous d'un volume limite de données (513) ;
• dans le cas où l'utilisateur a choisi au moins une partie des rapports d'analyse de l'un des ensembles de rapport (516), chargement dans la mémoire à partir de la base de données de toutes les tables de données non encore chargées nécessaires pour créer l'au moins la partie des rapports d'analyse de celui des ensembles de rapports (517) et création d'au moins la partie des rapports d'analyse de celui des ensembles de rapports en utilisant toutes les tables de données respectives en mémoire (518) ;
où le chargement dans la mémoire à partir de la base de données de toutes les tables manquantes de l'autre ensemble de la table respective (511) est réalisé dans le cas où l'utilisateur n'a pas choisi l'au moins une partie des rapports d'analyse de celui des ensembles de rapports (516).

8. Terminal d'extrémité selon les revendications 7 ou 8, dans lequel la mémoire est la mémoire principale du terminal d'extrémité, la mémoire principale comprend une base de données en mémoire, et les tables de données chargées dans la mémoire principale sont stockées dans la base de données en mémoire.

9. Terminal d'extrémité selon l'une des revendications 6 à 8, dans lequel un terminal distant (171) comprend la base de données, où le terminal distant est couplé de manière communicative au terminal d'extrémité (171) comprenant la base de données (163) via un réseau numérique de télécommunication cellulaire (169), où le chargement dans la mémoire à partir de la base de données de n'importe quelle table de données est réalisé via le réseau numérique de télécommunication cellulaire, où le terminal d'extrémité comprend en outre un terminal sans fil (162) qui est configuré pour coupler de manière communicative le terminal d'extrémité au terminal distant via le réseau numérique de télécommunication cellulaire, où le terminal sans fil est dans un mode veille par défaut et dans un mode de transmission des données lorsque le chargement dans la mémoire à partir de la base de données de n'importe laquelle des tables de données est exécuté via le réseau numérique de télécommunication cellulaire, où une consommation de l'énergie électrique du terminal sans fil dans le mode veille est plus faible qu'une consommation de l'énergie électrique du terminal sans fil dans le mode transmission des données, où la consommation de l'énergie électrique du terminal d'extrémité dans le mode économie de l'énergie électrique et dans le mode standard de consommation de l'énergie électrique comprend la consommation de l'énergie électrique du terminal sans fil dans le mode veille lorsque le terminal sans fil est dans le mode veille et la consommation de l'énergie électrique du terminal d'extrémité dans le mode économie de l'énergie électrique et dans le mode standard de consommation de l'énergie électrique comprend la consommation de l'énergie électrique du terminal sans fil dans le mode transmission des données lorsque le terminal sans fil est dans le mode transmission des données.

10. Terminal d'extrémité selon la revendication 9, dans lequel le chargement dans la mémoire à partir de la base de données de l'une quelconque des tables de données est exécuté dans le cadre d'un échange respectif de communication demande - réponse entre la base de données et le terminal d'extrémité via le réseau numérique de télécommunication cellulaire, où la moyenne temporelle d'un nombre d'échanges de communication demande - réponse générée lorsque le terminal d'extrémité est dans le mode économie de l'énergie électrique est inférieure ou égale à la moyenne temporelle du nombre d'échanges demande - réponse générée lorsque le terminal d'extrémité est dans le mode standard de consommation de l'énergie électrique.

11. Support lisible par ordinateur sur lequel est stocké un code exécutable par ordinateur pour l'exécution par une unité de traitement contrôlant un terminal d'extrémité, où l'exécution des instructions du code exécutable amène l'unité de traitement à exécuter le procédé mis en oeuvre par ordinateur selon les revendications 1 à 5 sur le terminal d'extrémité.
